(19) Europäisches Patentamt
European Patent Office
Office européen des brevets

(11) **EP 3 147 299 B1**

(12) **EUROPEAN PATENT SPECIFICATION**

(45) Date of publication and mention
of the grant of the patent:
**10.07.2019 Bulletin 2019/28**

(51) Int Cl.:
*C08F 297/04* (2006.01)     *C08L 53/02* (2006.01)
*C09J 11/00* (2006.01)     *C09J 153/02* (2006.01)
*C08F 6/00* (2006.01)     *C09J 5/00* (2006.01)
*C09J 7/38* (2018.01)     *C09J 7/25* (2018.01)

(21) Application number: **15796218.4**

(22) Date of filing: **12.05.2015**

(86) International application number:
**PCT/JP2015/063695**

(87) International publication number:
**WO 2015/178260 (26.11.2015 Gazette 2015/47)**

(54) **CRUMB OF BLOCK COPOLYMER AND ADHESIVE COMPOSITION**

GRANULAT AUS BLOCKCOPOLYMER UND KLEBSTOFFZUSAMMENSETZUNG

GRANULE DE COPOLYMÈRE SÉQUENCÉ ET COMPOSITION ADHÉSIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2014 JP 2014104562**

(43) Date of publication of application:
**29.03.2017 Bulletin 2017/13**

(73) Proprietor: **ASAHI KASEI KABUSHIKI KAISHA
Tokyo 100-0006 (JP)**

(72) Inventors:
• **NAKATANI, Kosuke
Tokyo 101-8101 (JP)**
• **KUBO, Nobuaki
Tokyo 101-8101 (JP)**
• **NAKAJIMA, Shigeo
Tokyo 101-8101 (JP)**
• **HISASUE, Takahiro
Tokyo 101-8101 (JP)**
• **SHIBUYA, Kenta
Tokyo 101-8101 (JP)**

(74) Representative: **Strehl Schübel-Hopf & Partner
Maximilianstrasse 54
80538 München (DE)**

(56) References cited:
WO-A1-00/12645     WO-A1-01/30859
WO-A1-2012/056939     GB-A- 2 280 189
JP-A- H08 301 929     JP-A- 2012 528 027

**Description**

Technical Field

The present invention relates to a crumb of block copolymer and a pressure-sensitive adhesive composition using the same.

Background Art

In recent years, from the viewpoints of energy saving, resource saving, environmental load reduction and the like, there have been broadly utilized hot melt pressure-sensitive adhesives; and as base polymers for the hot melt pressure-sensitive adhesives, there are broadly used vinyl aromatic monomer-conjugated diene monomer-based block copolymers (for example, SBS; styrene-butadiene-styrene block copolymers and the like). Pressure-sensitive adhesive compositions obtained by using these block copolymers, however, are unsatisfactory in the balance among holding power, tack and adhesive power, thus these properties have been desired to be improved, and many proposals have been made accordingly.

For example, Patent Literature 1 discloses a pressure-sensitive adhesive composition composed of a triblock copolymer and a diblock copolymer. Patent Literature 2 discloses a pressure-sensitive adhesive composition composed of a block copolymer obtained by coupling with a specific bifunctional coupling agent (specific dihalogen compound). Patent Literature 3 discloses a pressure-sensitive adhesive composition composed of a block copolymer obtained by hydrogenating, in a specific proportion, a block copolymer of a vinyl aromatic monomer and a conjugated diene monomer.

There polymers generally are easier to handle and are thus available in the form of a pellet. Patent Literature 4 discloses a block copolymer in the form of a crumb that is controlled to meet specific requirements.

Citation List

Patent Literature

      Patent Literature 1: Japanese Patent Laid-Open No. 61-278578
      Patent Literature 2: Japanese Patent Laid-Open No. 63-248817
      Patent Literature 3: Japanese Patent Laid-Open No. 05-98130
      Patent Literature 4: International Publication No. WO 2012/056939

Summary of Invention

Technical Problem

Also in technologies conventionally proposed as described above, however, the block copolymers have problems with respect to solubility, transportability, the melt viscosity of pressure-sensitive adhesive compositions and odor and, moreover, the balance among these properties is also unsatisfactory.

The present invention has been achieved in consideration of the above-mentioned problems, and has an object of to provide a crumb of a block copolymer, which is excellent in transportability and, when used for a pressure-sensitive adhesive composition, is capable of forming a pressure-sensitive adhesive composition excellent in solubility, the low-melt viscosity property, the low-odor property and the balance among these properties, and a pressure-sensitive adhesive composition comprising the crumb of a block copolymer.

Solution to Problem

As a result of exhaustive studies to solve the above conventional problems, the present inventors have found that a crumb of a block copolymer having a specific structure and a pressure-sensitive adhesive composition comprising the crumb, a tackifier and the like in respective predetermined amounts can solve the above-mentioned conventional technical problems, and this finding has led to the completion of the present invention.

That is, the present invention is as follows.

    1. A crumb of a block copolymer, wherein
the block copolymer comprises at least one polymer block comprising a vinyl aromatic hydrocarbon monomer unit as a primary component and at least one polymer block comprising a conjugated diene compound monomer unit as a primary component; and the block copolymer has a weight-average molecular weight of 20,000 to 1,000,000; and the crumb satisfies requirements (a) to (c) below:

(a) a specific surface area is 0.000001 $m^2$/g or larger and smaller than 0.3 $m^2$/g;
(b) a cumulative pore volume of pores having a pore radius of 1 $\mu$m to 100 $\mu$m is 0.08 mL/g or larger and smaller than 1.0 mL/g; and
(c) an average pore radius is 0.005 $\mu$m or larger and 0.05 $\mu$m or smaller.

2. The crumb of a block copolymer according to claim 1, wherein the specific surface area is 0.000001 $m^2$/g or larger and 0.2 $m^2$/g or smaller.

3. The crumb of a block copolymer according to the above 1 or 2, wherein the average pore radius is 0.025 $\mu$m or smaller.

4. The crumb of a block copolymer according to any of the above 1 to 3, wherein a value obtained by dividing a maximum value of a log differential pore intrusion volume at a pore radius of 1 $\mu$m or larger and 100 $\mu$m or smaller by a maximum value of a log differential pore intrusion volume at a pore radius of 0.001 $\mu$m or larger and smaller than 1 $\mu$m ((a maximum value of a log differential pore intrusion volume at a pore radius of from 1 $\mu$m to 100 $\mu$m)/(a maximum value of a log differential pore intrusion volume at a pore radius of 0.001 $\mu$m or larger and smaller than 1 $\mu$m)) is 0.1 to 2.

5. The crumb of a block copolymer according to any of the above 1 to 4, wherein the cumulative pore volume is 0.0001 mL/g or larger and smaller than 0.6 mL/g.

6. The crumb of a block copolymer according to any of the above 1 to 5, wherein the cumulative pore volume is 0.0001 mL/g or larger and smaller than 0.4 mL/g.

7. The crumb of a block copolymer according to any of the above 1 to 6, wherein a value obtained by dividing a cumulative pore volume of pores having a pore radius of 1 to 100 $\mu$m by a cumulative pore volume of pores having a pore radius of 0.001 $\mu$m or larger and 100 $\mu$m or smaller ((a cumulative pore volume of pores having a pore radius of 1 $\mu$m to 100 $\mu$m)/(a cumulative pore volume of pores having a pore radius of 0.001 $\mu$m to 100 $\mu$m)) is 0.30 or larger and 0.80 or smaller.

8. The crumb of a block copolymer according to any of the above 1 to 7, wherein a value obtained by dividing a cumulative pore volume of pores having a pore radius of 1 to 100 $\mu$m by the cumulative pore volume of pores having a pore radius of 0.001 $\mu$m or larger and 100 $\mu$m ((a cumulative pore volume of pores having a pore radius of 1 $\mu$m to 100 $\mu$m)/(a cumulative pore volume of pores having a pore radius of 0.001 $\mu$m to 100 $\mu$m)) is 0.40 or larger and 0.77 or smaller.

9. The crumb of a block copolymer according to any of the above 1 to 8, wherein a content of the vinyl aromatic monomer unit in the block copolymer is 5mass% or higher and lower than 20mass%.

10. The crumb of a block copolymer according to any one of the above 1 to 9, wherein a content of the vinyl aromatic hydrocarbon unit in the block copolymer is 20mass% or higher, or higher and 50mass% or lower.

11. The crumb of a block copolymer according to any one of claims 1 to 10, wherein

the block copolymer is a block copolymer composition comprising a component (A) and a component (B);

the component (A) comprises at least one polymer block comprising a vinyl aromatic hydrocarbon and at least one polymer block comprising a conjugated diene compound, and has a weight-average molecular weight of 20,000 or higher and 500,000 or lower;

the component (B) comprises at least one polymer block comprising a vinyl aromatic hydrocarbon as a primary component and at least one polymer block comprising a conjugated diene compound as a primary component, and has a weight-average molecular weight of 30,000 or higher and 1,000,000 or lower; and

a ratio between the weight-average molecular weights of the component (A) and the component (B) ((the weight-average molecular weight of the component (B))/(the weight-average molecular weight of the component (A)) is from 1.3 to 10.

12. The crumb of a block copolymer according to the above 11, wherein

a content of the component (A) is 20weight% or more and 90weight% or less, and

a content of the component (B) is 10weight% or more and 80weight% or less.

13. The crumb of a block copolymer according to the above 11 or 12, wherein the weight-average molecular weight of the component (A) is lower than 200,000.

14. The crumb of a block copolymer according to the above 11 or 12, wherein the weight-average molecular weight of the component (A) is 70,000 or higher and 500,000 or lower.

15. The crumb of a block copolymer according to the above 11 or 12, wherein the weight-average molecular weight of the component (A) is 20,000 or higher and 120,000 or lower.

16. The crumb of a block copolymer according to any of the above 11 to 15, wherein the weight-average molecular weight of the component (B) is 140,000 or higher and 1,000,000 or lower.

17. The crumb of a block copolymer according to any of the above 11 to 16, wherein the weight-average molecular weight of the component (B) is 200,000 or higher and 1,000,000 or lower.

18. The crumb of a block copolymer according to the above 11 or 12, wherein the weight-average molecular weight of the component (B) is 30,000 or higher and 200,000 or lower.

19. The crumb of a block copolymer according to any one of the above 11 to 18, wherein the component (B) comprises two polymer blocks comprising a vinyl aromatic hydrocarbon monomer unit as a primary component and at least one polymer block comprising a conjugated diene compound monomer unit as a primary component.

20. The crumb of a block copolymer according to any of the above 1 to 19, wherein a degree of hydrogenation H (mol%) of unsaturated double bonds based on a conjugated diene compound is 5% or higher.

21. The crumb of a block copolymer according to any of the above 1 to 20, wherein a degree of hydrogenation H (mol%) of unsaturated double bonds based on a conjugated diene compound is 90% or lower.

22. A pressure-sensitive adhesive composition, comprising:

> 100 parts by mass of a polymer comprising the crumb of a block copolymer according to any of the above 1 to 21;
> from 20 to 500 parts by mass of a tackifier; and
> from 0 to 300 parts by mass of a softener.

Advantageous Effects of Invention

The present invention can provide a crumb of a block copolymer, which is excellent in transportability and, when used for a pressure-sensitive adhesive composition, is capable of forming a pressure-sensitive adhesive composition excellent in solubility, the low-melt viscosity property, the low-odor property and the balance among these properties, and a pressure-sensitive adhesive composition comprising the crumb of a block copolymer.

Description of Embodiment

Hereinafter, an embodiment (hereinafter, referred to as "the present embodiment") of the present invention will be described in detail. The present invention is not limited to the following embodiment, and various changes and modifications may be made within the scope of its gist.

In the present description, a constituent unit constituting a polymer is referred to as "... monomer unit"; and in the case where the constituent unit is described as a material of the polymer, the "unit" is omitted and the constituent unit is described simply as "... monomer".

[Crumb of block copolymer]

The crumb of a block copolymer according to the present embodiment:

> the block copolymer comprises at least one polymer block comprising a vinyl aromatic hydrocarbon monomer unit as a primary component and at least one polymer block comprising a conjugated diene compound monomer unit as a primary component,
> it has a weight-average molecular weight of 20,000 to 1,000,000, and
> the crumb satisfies requirements (a) to (c) below:

> (a) the specific surface area is 0.000001 $m^2$/g or larger and smaller than 0.3 $m^2$/g (hereinafter sometimes referred to as "requirement (a)");
> (b) the cumulative pore volume of pores having a pore radius of 1 to 100 $\mu$m is 0.08 mL/g or larger and smaller than 1.0 mL/g (hereinafter sometimes referred to as "requirement (b)"); and
> (c) the average pore radius is 0.05 $\mu$m or larger and is 0.05 $\mu$m or smaller (hereinafter sometimes referred to as "requirement (c)").

In the present description, the crumb of a block copolymer according to the present embodiment may be simply referred to as a "crumb".

The specific surface area of the crumb of a block copolymer according to the present embodiment is 0.000001 $m^2$/g or larger and smaller than 0.3 $m^2$/g, preferably 0.2 $m^2$/g or smaller, more preferably 0.15 $m^2$/g or smaller, still more preferably 0.1 $m^2$/g or smaller, further still more preferably 0.08 $m^2$/g or smaller, and especially preferably 0.05 $m^2$/g or smaller. When the specific surface area is 0.000001 $m^2$/g or larger, the crumb is excellent in solubility, and a pressure-sensitive adhesive composition comprising such a crumb is excellent in the pressure-sensitive adhesive property and the low-odor property, and when the specific surface area is smaller than 0.3 m$^2$/g, the crumb is excellent in solubility and transportability, and a pressure-sensitive adhesive composition comprising such a crumb is excellent in the pressure-sensitive adhesive property.

The average pore radius of the crumb of a block copolymer according to the present embodiment is 0.005 μm or larger, and especially preferably 0.0085 μm or larger. Further, the upper limit 0.05 μm or lower, more preferably 0.025 μm or lower, further still more preferably 0.02 μm or lower, and especially preferably 0.016 μm or lower. When the average pore radius is 0.00001 μm or larger, the crumb is excellent in solubility, and a pressure-sensitive adhesive composition in which such a crumb is used is excellent in the pressure-sensitive adhesive property and the low-odor property, and when the average pore radius is 1.5 μm or smaller, the crumb is excellent in solubility, a pressure-sensitive adhesive composition in which such a crumb is used is excellent in pressure-sensitive adhesive performance.

The value of the crumb of a block copolymer according to the present embodiment obtained by dividing the maximum value of a log differential pore intrusion volume at a pore radius of 1 μm or larger and 100 μm by the maximum value of a log differential pore intrusion volume at a pore radius of 0.001 μm or larger and smaller than 1 μm [(the maximum value of a log differential pore intrusion volume at a pore radius of 1 μm or larger and 100 μm or smaller)/(the maximum value of a log differential pore intrusion volume at a pore radius of 0.001 μm or larger and smaller than 1 μm)] (hereinafter, this value may be simply referred to as "Z") is preferably 0.1 or larger and 6 or smaller. The Z of the crumb is preferably is 0.25 or larger, more preferably 0.3 or larger, still more preferably 0.4 or larger, further still more preferably 0.5 or larger, and especially preferably 0.6 or larger. Further, it is more preferably 2 or smaller, still more preferably 1.5 or smaller, further still more preferably 1.45 or smaller, further still more preferably 1.35 or smaller, and especially preferably 1.0 or smaller. When this value (Z) is 0.1 or larger, the crumb is excellent in solubility, and a pressure-sensitive adhesive composition obtained from such a crumb is excellent in the low-odor property and the viscous adhesive property, and when the value is 6 or smaller, the crumb and the pressure-sensitive adhesive composition are excellent in solubility.

The cumulative pore volume of the crumb of a block copolymer according to the present embodiment is preferably 0.0001 mL/g or larger and 1.2 mL/g or smaller. The cumulative pore volume of the crumb is more preferably 0.01 mL/g or larger, still more preferably 0.05 mL/g or larger, further still more preferably 0.1 mL/g or larger, and especially preferably 0.2 mL/g or larger. Further, the cumulative pore volume is more preferably smaller than 0.6 mL/g, still more preferably 0.5 mL/g or smaller, and still more preferably smaller than 0.4 mL/g. When the cumulative pore volume is 0.0001 mL/g or larger, the crumb is excellent in solubility, and a pressure-sensitive adhesive composition obtained by using such a crumb is excellent in the low-odor property, and when the cumulative pore volume is 1.2 mL/g or smaller, the crumb is excellent in solubility.

In the crumb of a block copolymer according to the present embodiment, the cumulative pore volume of pores having a pore radius of from 1 μm to 100 μm is 0.08 mL/g or larger and smaller than 1.0 mL/g. When the cumulative pore volume is 0.05 ml/g or larger, the crumb is excellent in solubility, and a pressure-sensitive adhesive composition obtained by using such a crumb is excellent in the low-odor property. When the cumulative pore volume is smaller than 1.0 mL/g, the crumb is excellent in solubility.

In the crumb of a block copolymer according to the present embodiment, the value obtained by dividing the cumulative pore volume of pores having a pore radius of 1 μm to 100 μm by the cumulative pore volume of pores having a pore radius of 0.001 μm or larger and 100 μm or smaller ((the cumulative pore volume of pores having a pore radius of 1 μm to 100 μm)/(the cumulative pore volume of pores having a pore radius of 0.001 μm to 100 μm)) is preferably 0.3 or larger and is preferably 0.8 or smaller. The lower limit of this value is more preferably 0.4 or higher, still more preferably 0.45 or higher, and further still more preferably 0.5 or higher. The upper limit is more preferably 0.77 or lower, still more preferably that 0.72 or lower, further still more preferably 0.69 or lower, and especially preferably 0.66 or lower. When the value obtained by dividing the cumulative pore volume of pores having a pore radius of 1 to 100 μm by the cumulative pore volume of pores having a pore radius of 0.001 μm or larger and 100 μm or smaller ((the cumulative pore volume of pores having a pore radius of 1 μm to 100 μm)/(the cumulative pore volume of pores having a pore radius of 0.001 μm to 100 μm)) is 0.3 or larger, the crumb has better solubility than the crumb, and a pressure-sensitive adhesive composition comprising such a crumb is excellent in the low-odor property, and when the value is 0.8 or smaller, the crumb is excellent in solubility.

The specific surface area, the average pore radius, [(the maximum value of a log differential pore intrusion volume at a pore radius of 1 μm or larger and 100 μm or smaller)/(the maximum value of a log differential pore intrusion volume at a pore radius of 0.001 μm or larger and smaller than 1 μm)], the cumulative pore volume, the cumulative pore volume of pores having a pore radius of 1 to 100 μm, and the value obtained by dividing the cumulative pore volume of pores having a pore radius of 1 to 100 μm by the cumulative pore volume of pores having a pore radius of 0.001 μm or larger and 100 μm ((the cumulative pore volume of pores having a pore radius of 1 μm to 100 μm)/(the cumulative pore volume of pores having a pore radius of 0.001 μm to 100 μm)) of the crumb of a block copolymer can be controlled in the above ranges by adjusting the structure of the block copolymer and various conditions of its production method described later, and their values are measured by methods to be described in Examples described later.

[Block copolymer]

The block copolymer constituting the crumb according to the present embodiment comprises at least one polymer block comprising a vinyl aromatic hydrocarbon monomer unit (hereinafter also referred to as a "polymer block Ar") as a primary component and at least one polymer block comprising a conjugated diene compound monomer unit (hereinafter also referred to as a "polymer block D") as a primary component, and has a weight-average molecular weight of 20,000 or higher and 1,000,000 or lower, preferably 50,000 or higher, and more preferably 70,000 or higher. Further, the upper limit is preferably 500,000 or lower.

When the weight-average molecular weight of the block copolymer is 20,000 or higher, there are obtained a block copolymer and a pressure-sensitive adhesive composition excellent in holding power, adhesive power and productivity, and when the weight-average molecular weight of the block copolymer is 1,000,000 or lower, there are obtained a block copolymer and a pressure-sensitive adhesive composition having excellent low-melt viscosity property. Here, the weight-average molecular weight of the block copolymer can be determined by a method to be described in Examples.

In the case where a plurality of the polymer blocks Ar and/or D is present in the block copolymer, the weight-average molecular weight, composition and structure of each polymer blocks Ar or D may be identical or different.

In the present description, "comprising a vinyl aromatic hydrocarbon monomer unit as a primary component" means that the content of the vinyl aromatic hydrocarbon monomer unit in the polymer block is 60mass% or higher, preferably 80mass% or higher, more preferably 90mass% or higher, and still more preferably 95mass% or higher.

Further, in the present description, "comprising a conjugated diene compound monomer unit as a primary component" means that the content of the conjugated diene compound monomer unit in the polymer block is 60mass% or higher, preferably 80mass% or higher, more preferably 90mass% or higher, and still more preferably 95mass% or higher.

The structure of the block copolymer is not especially limited, but examples thereof include the following formulae (i) to (vi).

$$(Ar\text{-}D)_n \dots \qquad (i)$$

$$D\text{-}(Ar\text{-}D)_n \dots \qquad (ii)$$

$$Ar\text{-}(D\text{-}Ar)_n \dots \qquad (iii)$$

$$Ar\text{-}(D\text{-}Ar)_n\text{-}X \dots \qquad (iv)$$

$$[(Ar\text{-}D)_k]_m\text{-}X \dots \qquad (v)$$

$$[(Ar\text{-}D)_k\text{-}Ar]_m\text{-}X \dots \qquad (vi)$$

(In the above formulae (i) to (vi), Ar denotes a polymer block (Ar) comprising a vinyl aromatic hydrocarbon monomer unit as a primary component; D denotes a polymer block (D) comprising a conjugated diene compound monomer unit as a primary component; X denotes a residue of a coupling agent or a residue of a polymerization initiator such as a polyfunctional organolithium; m, n and k each denote an integer of 1 or more, preferably an integer of from 1 to 6; when there is a plurality of Ar, the kinds of vinyl aromatic hydrocarbon monomer units and the molecular weights may be identical or different; and when there is a plurality of D, the kinds of conjugated diene compound monomer units and the molecular weights may be identical or different.)

The content of the vinyl aromatic hydrocarbon monomer unit in the block copolymer according to the present embodiment is not especially limited, but is preferably 5mass% or higher, more preferably 8mass% or higher, and still more preferably 10mass% or higher. Further, the content of the vinyl aromatic hydrocarbon monomer unit in the block copolymer is not especially limited, but is preferably 90mass% or lower, more preferably 70mass% or lower, still more preferably 50mass% or lower, further still more preferably 45mass% or lower, especially preferably 40mass% or lower, and particularly more preferably lower than 20mass%. When the content of the vinyl aromatic hydrocarbon monomer unit in the block copolymer according to the present embodiment is in the above range, there are likely to be obtained a block copolymer and a pressure-sensitive adhesive composition having excellent viscous adhesive performance as well as an excellent balance thereof. Particularly when the content of the vinyl aromatic hydrocarbon monomer unit is 5mass% or higher, a block copolymer and a pressure-sensitive adhesive composition having excellent adhesive power and holding power are likely to be obtained. Further, when the content of the vinyl aromatic hydrocarbon monomer unit is 90mass% or lower, a block copolymer and a pressure-sensitive adhesive composition having excellent tack are likely to be obtained.

In the case where the crumb of the block copolymer is used for sanitary material applications, the content of the vinyl aromatic hydrocarbon monomer unit in the block copolymer is preferably 10mass% or higher, more preferably 20mass% or higher, and still more preferably 25mass% or higher. Further, the content is preferably 70mass% or lower, more preferably 50mass% or lower, still more preferably 45mass% or lower, and further still more preferably 40mass% or lower. When the content of the vinyl aromatic hydrocarbon monomer unit in the block copolymer is 10mass% or higher, there are likely to be obtained a block copolymer and a pressure-sensitive adhesive composition having excellent adhesive power and holding power. Further, when the content of the vinyl aromatic hydrocarbon monomer unit is 70mass% or lower, a block copolymer and a pressure-sensitive adhesive composition having excellent tack are likely to be obtained.

In the case where the crumb of the block copolymer is used for tape and label applications, the content of the vinyl aromatic hydrocarbon monomer unit in the block copolymer is preferably 5mass% or higher, more preferably 8mass% or higher, and still more preferably 10mass% or higher. Further, the content is preferably 40mass% or lower, more preferably 30mass% or lower, still more preferably 25mass% or lower, and further still more preferably lower than 20mass%. When the content of the vinyl aromatic hydrocarbon monomer unit in the block copolymer is 5mass% or higher, there are likely to be obtained a block copolymer and a pressure-sensitive adhesive composition having excellent adhesive power and holding power. Further, when the content of the vinyl aromatic hydrocarbon monomer unit is 40mass% or lower, a block copolymer and a pressure-sensitive adhesive composition having excellent tack are likely to be obtained.

Here, in the case where the crumb is a crumb of a block copolymer composition comprising a component (A) and a component (B) described later, the content of the vinyl aromatic hydrocarbon monomer unit in the block copolymer refers to not the content of each component but the content of the block copolymer as a whole, i.e., the average of the contents of respective components. The content of the vinyl aromatic hydrocarbon monomer unit in the block copolymer can be measured by a method to be described in Examples described later.

Further, the conjugated diene compound monomer unit (an unsaturated double bond based on a conjugated diene compound) contained in the polymer block comprising a conjugated diene compound monomer unit as a primary component in the block copolymer according to the present embodiment may be hydrogenated. The degree of hydrogenation of the conjugated diene compound monomer unit is preferably 5mol% or higher and preferably 90mol% or lower. The degree of hydrogenation of the conjugated diene compound monomer unit is more preferably 10mol% or higher, more preferably 15mol% or higher, and still more preferably 20mol% or higher. A degree of hydrogenation of 5mol% or higher is likely to result in excellent holding power, tack and adhesive power. Further, the degree of hydrogenation of the conjugated diene compound monomer unit is more preferably 80mol% or lower, still more preferably 70mol% or lower, and further still more preferably 60mol% or lower. A degree of hydrogenation of 90mol% or lower is likely to result in excellent low-viscosity property.

Further, the degree of hydrogenation of the conjugated diene compound monomer unit is preferably 10mol% or higher and 80mol% or lower, more preferably 15mol% or higher and 70mol% or lower, and still more preferably 20mol% or higher and 60mol% or lower. When the degree of hydrogenation of the conjugated diene compound monomer unit is in the above range, a hydrogenated block copolymer and a pressure-sensitive adhesive composition excellent in the pressure-sensitive adhesive property and the low-melt viscosity property and also excellent in the balance therebetween are likely to be obtained. The degree of hydrogenation of the conjugated diene compound monomer unit in the hydrogenated block copolymer can be measured by a method to be described in Examples.

Further, the upper limit of the vinyl bond content of the conjugated diene compound monomer units (before hydrogenation in the case where they are hydrogenated) in the block copolymer is preferably 80mol% or lower, more preferably 70mol% or lower, still more preferably 60mol% or lower, and further still more preferably 50mol% or lower. Further, the lower limit of the vinyl bond content of the conjugated diene compound monomer units before hydrogenation is preferably 5mol% or higher, more preferably 8mol% or higher, still more preferably 10mol% or higher, further still more preferably 25mol% or higher, and especially preferably 30mol% or higher. More specifically, the vinyl bond content of the conjugated diene compound monomer units before hydrogenation in the block copolymer is preferably 5mol% or higher and 80mol% or lower, preferably 8mol% or higher and 70mol% or lower, and preferably 10mol% or higher and 60mol% or lower. When the vinyl bond content of the conjugated diene compound monomer units is in the above range, excellent properties such as productivity, tack and adhesive power are likely to be achieved.

Here, in the case where the crumb is a crumb of a block copolymer composition comprising a component (A) and a component (B) described later, the vinyl bond content of the conjugated diene compound monomer units (the vinyl bond content of the conjugated diene compound monomer units before hydrogenation in the case where they are hydrogenated) refers to not the value of each component but the vinyl bond content of the block copolymer as a whole, i.e., the average of the vinyl bond content of respective components. Here, the "vinyl bond content" is a proportion of the total molar amount of conjugated diene compound monomer units incorporated in the component (A) the component (B) by the bonding forms of 1,2-bond and 3,4-bond to the total molar amount of conjugated diene compound monomer units incorporated by the bonding forms of 1,2-bond, 3,4-bond and 1,4-bond, before hydrogenation. The vinyl bond content of the conjugated diene compound monomer unit can be measured by a nuclear magnetic resonance spectral

EP 3 147 299 B1

analysis (NMR), and specifically, can be measured by a method to be described in Examples described later.

In the case where the hydrogenation is performed, the proportion after hydrogenation of the total molar amount of the conjugated diene compound monomer units incorporated by the bonding forms of non-hydrogenated 1,2-bond, hydrogenated 1,2-bond, non-hydrogenated 3,4-bond and hydrogenated 3,4-bond to the total molar amount of the conjugated diene compound monomer units incorporated by the bonding forms of non-hydrogenated 1,2-bond, hydrogenated 1,2-bond, non-hydrogenated 3,4-bond, hydrogenated 3,4-bond, non-hydrogenated 1,4-bond and hydrogenated 1,4-bond, is equal to the vinyl bond content of the conjugated diene compound monomer units before hydrogenation. In the case where the crumb is a crumb comprising a hydrogenated block copolymer composition, the vinyl bond content of the conjugated diene compound monomer units before hydrogenation refers to not the value of each component but the vinyl bond content of the hydrogenated block copolymer as a whole, i.e., the average of the vinyl bond content of respective components. Therefore, the vinyl bond content of the conjugated diene compound monomer units before hydrogenation can be determined by a nuclear magnetic resonance spectral analysis (NMR) using a hydrogenated block copolymer composition, and specifically, can be determined by a method to be described in Examples described later. Here, in the case where the block copolymer is hydrogenated, since the values of the content of the vinyl aromatic hydrocarbon monomer units and the weight-average molecular weights take nearly the same values before and after hydrogenation, the values after the hydrogenation are employed.

Conjugated bonds of the vinyl aromatic hydrocarbon monomer units may be hydrogenated in the hydrogenation step, but from the viewpoints of the holding power and the adhesion, the degree of hydrogenation of the conjugated bonds of the whole vinyl aromatic hydrocarbon monomer units is preferably 30mol% or lower, more preferably 10mol% or lower, and still more preferably 3mol% or lower.

[Block copolymer composition]

From the viewpoint of improving the balance between the pressure-sensitive adhesive property and the low-melt viscosity property, it is preferable that the crumb according to the present embodiment is a crumb of a block copolymer composition comprising block copolymers having two different structures of the following component (A) and component (B). At this time, the ratio between the weight-average molecular weights of the component (A) and the component (B) [(the weight-average molecular weight of the component (B))/(the weight-average molecular weight of the component (A))] is preferably from 1.3 to 10.

The component (A) is preferably a block polymer comprising at least one a polymer block (Ar) comprising a vinyl aromatic hydrocarbon monomer unit as a primary component and at least one polymer block (D) comprising a conjugated diene compound monomer unit as a primary component, and has a weight-average molecular weight of 20,000 or higher and 500,000 or lower, and

the component (B) is preferably a block polymer comprising at least one a polymer block (Ar) comprising a vinyl aromatic hydrocarbon monomer unit as a primary component and at least one polymer block (D) comprising a conjugated diene compound monomer unit as a primary component, and has a weight-average molecular weight of 30,000 or higher and 1,000,000 or lower.

In the case where a plurality of polymer blocks Ar and/or D is present in a block copolymer of the component (A) and/or the component (B), the weight-average molecular weight, composition and structure of each polymer blocks Ar or D may be identical or different.

With respect to the respective contents of the component (A) and the component (B) in the block copolymer crumb, preferably the component (A) is 20mass% or more and 90mass% or less, and the component (B) is 10mass% or more and 80mass% or less; more preferably, the component (A) is 30mass% or more and 85mass% or less, and the component (B) is 15mass% or more and 70mass% or less; still more preferably, the component (A) is 35mass% or more and 80mass% or lower, and the component (B) is 20mass% or more and 65mass% or less; and further still more preferably the component (A) is 40mass% or more and 75mass% or less, and the component (B) is 25mass% or more and 60mass% or less.

When the contents of the component (A) and the component (B) are in the above ranges, a crumb of a block copolymer and a pressure-sensitive adhesive composition that are excellent in both the low-melt viscosity property and the pressure-sensitive adhesive property and also have a good balance therebetween are obtained.

The contents of the component (A) and the component (B) can be controlled in the above ranges by adjusting various conditions of a production method described later. Further, the contents of the component (A) and the component (B) can be measured by a method to be described in Examples described later. Here, in the case where the block copolymer is hydrogenated, the values of the contents of the component (A) and the component (B) are nearly the same before and after hydrogenation, the values after hydrogenation are employed.

The ratio of the weight-average molecular weight of the component (B) to the weight-average molecular weight of the component (A) ((the weight-average molecular weight of the component (B))/(the weight-average molecular weight of the component (A))) is preferably 1.3 or higher and 10 or lower, more preferably 1.5 or higher and 8.0 or lower, and

8

still more preferably 1.8 or higher and 5.0 or lower. When the ratio of the weight-average molecular weight of the component (B) to the weight-average molecular weight of the component (A) is in the above range, a crumb of a block copolymer and a pressure-sensitive adhesive composition excellent in the low-melt viscosity property and the pressure-sensitive adhesive property and also excellent in the balance therebetween are obtained. The contents, the weight-average molecular weights, and the ratio of the weight-average molecular weights of the component (A) and the component (B) can be controlled in the above ranges by adjusting various conditions of a production method described later. Further, the contents, the weight-average molecular weights, and the ratio of the weight-average molecular weights of the component (A) and the component (B) can be measured by methods to be described in Examples described later. Hereinafter, the each component will be described in detail.

[Block copolymers]

(Component (A))

It is preferable that the component (A) comprises at least one polymer block (Ar) comprising a vinyl aromatic hydrocarbon monomer unit as a primary component and at least one polymer block (D) comprising a conjugated diene compound monomer unit as a primary component. It is more preferable that the component (A) is a block copolymer comprising a polymer block (Ar) comprising a vinyl aromatic hydrocarbon monomer unit as a primary component and at least one polymer block (D) comprising a conjugated diene compound monomer unit as a primary component, and the number of the polymer block Ar is 1.

The weight-average molecular weight of the block copolymer of the component (A) is preferably 20,000 or higher and 500,000 or lower, and the upper limit is more preferably 30,000 or higher, still more preferably 40,000 or higher, further still more preferably 50,000 or higher, and especially preferably 70,000 or higher. The lower limit is more preferably lower than 200,000, still more preferably 175,000 or lower, further still more preferably 150,000 or lower, and especially preferably 120,000 or lower.

When the weight-average molecular weight of the component (A) is 20,000 or higher, there are obtained a crumb of a block copolymer and a pressure-sensitive adhesive composition excellent in productivity, and when the weight-average molecular weight of the component (A) is 500,000 or lower, there are obtained a crumb of a block copolymer and a pressure-sensitive adhesive composition having excellent low-melt viscosity property. Here, the weight-average molecular weight of the component (A) can be determined by a method to be described in Examples.

For use in tape or label applications, the weight-average molecular weight of the component (A) is preferably 40,000 or higher and 500,000 or lower, more preferably 70,000 or higher and 500,000 or lower, and still more preferably 40,000 or higher and lower than 200,000. For use in sanitary material applications, the weight-average molecular weight is preferably 20,000 or higher and 175,000 or lower, more preferably 20,000 or higher and 150,000 or lower, and still more preferably 20,000 or higher and 120,000 or lower.

The structure of the component (A) is not especially limited, but examples thereof include the following formulae (i) to (vi).

$$(Ar-D)_n ... \quad (i)$$

$$D-(Ar-D)_n ... \quad (ii)$$

$$Ar-(D-Ar)_n ... \quad (iii)$$

$$Ar-(D-Ar)_n-X ... \quad (iv)$$

$$[(Ar-D)_k]_m-X ... \quad (v)$$

$$[(Ar-D)_k-Ar]_m-X ... \quad (vi)$$

(In the above formulae (i) to (vi), Ar denotes a polymer block (Ar) comprising a vinyl aromatic hydrocarbon monomer unit as a primary component; D denotes a polymer block (D) comprising a conjugated diene compound monomer unit as a primary component; X denotes a residue of a coupling agent or a residue of a polymerization initiator such as a polyfunctional organolithium; m, n and k each denote an integer of 1 or more, preferably an integer of 1 to 6; when there is a plurality of Ar, the kinds of vinyl aromatic hydrocarbon monomer units and the molecular weights may be identical or different; and when there is a plurality of D, the kinds of conjugated diene compound monomer units and the molecular weights may be identical or different.)

Concerning the above formulae (i) to (vi), the component (A) is preferably a block copolymer containing one Ar, and is more preferably a block copolymer represented by Ar-D or D-Ar-D. When the component (A) has such a structure, a crumb of a block copolymer and a pressure-sensitive adhesive composition that have excellent low-melt viscosity property, adhesive power and tack and are also have an excellent balance thereamong are likely to be obtained.

(Component (B))

It is preferable that the component (B) comprises at least one polymer block (Ar) comprising a vinyl aromatic hydrocarbon monomer unit as a primary component and at least one polymer block (D) comprising a conjugated diene compound monomer unit as a primary component. It is more preferable that the component (B) comprises at least two polymer blocks (Ar) comprising a vinyl aromatic hydrocarbon monomer unit as a primary component and at least one polymer block (D) comprising a conjugated diene compound monomer unit as a primary component, and it is preferable that there are two or more polymer blocks (Ar) in the component (B).

The weight-average molecular weight of the block copolymer of the component (B) is preferably 30,000 or higher and 1,000,000 or lower, more preferably 50,000 or higher, and still more preferably 70,000 or higher. Further, the weight-average molecular weight is more preferably 500,000 or lower. When the weight-average molecular weight of the component (B) is 30,000 or higher, there are obtained a crumb of a block copolymer and a pressure-sensitive adhesive composition having excellent holding power and adhesive power, and when the weight-average molecular weight of the component (B) is 1,000,000 or lower, there are obtained a crumb of a block copolymer and a pressure-sensitive adhesive composition having excellent low-melt viscosity property. Here, the weight-average molecular weight of the component (B) can be determined by a method to be described in Examples.

In the case where the crumb of a block copolymer is used in tape or label applications, the weight-average molecular weight of the block copolymer of the component (B) is preferably 70,000 or higher, more preferably 100,000 or higher, still more preferably 140,000 or higher, further still more preferably 170,000 or higher, and especially preferably 200,000 or higher. Further, the weight-average molecular weight of the block copolymer of the component (B) is preferably 1,000,000 or lower, more preferably 850,000 or lower, still more preferably 650,000 or lower, and further still more preferably 500,000 or lower. When the weight-average molecular weight of the component (B) is 70,000 or higher, there are obtained a crumb of a block copolymer and a pressure-sensitive adhesive composition having excellent holding power and adhesive power, and when the weight-average molecular weight of the component (B) is 1,000,000 or lower, there are obtained a crumb of a block copolymer and a pressure-sensitive adhesive composition having excellent low-melt viscosity property.

In the case where the crumb of a block copolymer is used for sanitary material applications, the weight-average molecular weight of the block copolymer of the component (B) is preferably 30,000 or higher, more preferably 50,000 or higher, still more preferably 70,000 or higher, further still more preferably 90,000 or higher, and especially preferably 100,000 or higher. Further, the weight-average molecular weight of the block copolymer of the component (B) is preferably 850,000 or lower, more preferably 650,000 or lower, still more preferably 500,000 or lower, further still more preferably 300,000 or lower, and especially preferably 200,000 or lower. When the weight-average molecular weight of the component (B) is 30,000 or higher, there are obtained a crumb of a block copolymer and a pressure-sensitive adhesive composition having excellent holding power and adhesive power, and when the weight-average molecular weight of the component (B) is 850,000 or lower, there are obtained a crumb of a block copolymer and a pressure-sensitive adhesive composition having excellent low-melt viscosity property.

The structure of the component (B) is not especially limited, but examples thereof include the following formulae (vii) to (xiii).

$$(Ar\text{-}D)_e \ldots \qquad (vii)$$

$$D\text{-}(Ar\text{-}D)_e \ldots \qquad (viii)$$

$$Ar\text{-}(D\text{-}Ar)_g \ldots \qquad (ix)$$

$$[Ar\text{-}(D\text{-}Ar)_g]_f\text{-}X \ldots \qquad (x)$$

$$[D\text{-}(Ar\text{-}D)_g]_f\text{-}X \ldots \qquad (xi)$$

$$[(Ar\text{-}D)_g]_f\text{-}X \ldots \qquad (xii)$$

$$[(Ar\text{-}D)_g\text{-}Ar]_f\text{-}X \ldots \qquad (xiii)$$

(In the above formulae (vii) to (xiii), Ar denotes a polymer block (Ar) comprising a vinyl aromatic hydrocarbon monomer unit as a primary component; D denotes a polymer block (D) comprising a conjugated diene compound monomer unit as a primary component; X denotes a residue of a coupling agent or a residue of a polymerization initiator such as a polyfunctional organolithium; e and f each denote an integer of 2 or more; g denotes an integer of 1 or more, preferably a positive integer of 6 or less; when there is a plurality of Ar, the kinds of vinyl aromatic hydrocarbon monomer units and the molecular weights may be identical or different; and when there is a plurality of D, the kinds of conjugated diene compound monomer units and the molecular weights may be identical or different.)

Among formulae (vii) to (xiii), for the component (B), a block copolymer comprising two or more Ar is preferred, and a block copolymer comprising two Ar or having formula (xi) or formula (xii) in which g = 1 is more preferred, and a block copolymer represented by formulae Ar-D-Ar, $(Ar-D)_2X$, D-Ar-D-Ar, D-Ar-D-Ar-D, $[D-(Ar-D)]_2X$, $[D-(Ar-D)]_3$-X, $[(Ar-D)]_3$-X, $[D-(Ar-D)]_4$-X, and/or $[(Ar-D)]_4$-X is still more preferred. When the component (B) contains such block copolymers, a crumb of a block copolymer and a pressure-sensitive adhesive composition excellent in productivity and the pressure-sensitive adhesive property are likely to be obtained.

From the viewpoints of holding power and adhesive power, the component (B) is preferably a block copolymer comprising two polymer blocks comprising a vinyl aromatic hydrocarbon as a primary component and at least one polymer block comprising a conjugated diene compound as a primary component.

Further, it is more preferable that the block copolymer of the component (B) has a weight-average molecular weight of 140,000 or higher and is a block copolymer comprising two polymer blocks comprising a vinyl aromatic hydrocarbon as a primary component and at least one polymer block comprising a conjugated diene compound as a primary component. The block copolymer comprising two polymer blocks comprising a vinyl aromatic hydrocarbon as a primary component and at least one polymer block comprising a conjugated diene compound as a primary component is not especially limited, but examples thereof include formulae Ar-D-Ar, $(Ar-D)_2X$, D-Ar-D-Ar, D-Ar-D-Ar-D, $D-(Ar-D)_2X$, and mixtures of two or more of these.

It is preferable that the block copolymer constituting the crumb of a block copolymer according to the present embodiment is a block copolymer composition comprising the component (A) and the component (B) wherein the component (A) is a block copolymer comprising a polymer block (Ar) comprising a vinyl aromatic hydrocarbon monomer unit as a primary component and at least one polymer block (D) comprising a conjugated diene compound monomer unit as a primary component, with the number of the polymer block Ar being 1, and the component (B) comprises at least two polymer blocks (Ar) comprising a vinyl aromatic hydrocarbon monomer unit as a primary component and at least one polymer block (D) comprising a conjugated diene compound monomer unit as a primary component.

[Production method of crumb of block copolymer]

Although not especially limited, the crumb of a block copolymer can be produced by, for example, successively carrying out a polymerization step of polymerizing at least a conjugated diene compound monomer and a vinyl aromatic hydrocarbon monomer, with an organolithium compound as a polymerization initiator in a hydrocarbon solvent to thereby obtain a polymer, a solvent removal step of removing the solvent of a solution containing the block copolymer, and a crumbing step of crumbing the block copolymer after the solvent removal. Further, there may be a hydrogenation step of hydrogenating double bonds of the conjugated diene compound monomer unit of the polymer obtained through the polymerization step, and the hydrogenation step is preferably carried out after the polymerization step and before the solvent removal step. The weight-average molecular weight of the block copolymer can be controlled, for example, by adjusting the kind and the addition amount of a coupling agent described later. Further, the weight-average molecular weight can also be controlled by adding the polymerization initiator described later in a plurality of times and adjusting the addition amount and the number of times of addition. Further, the weight-average molecular weight can also be controlled by adjusting the addition amount of a deactivating agent described later in a deactivation step, which is carried out in the process of the polymerization reaction.

In the case where the block copolymer is a block copolymer composition comprising block copolymers having different structures of the component (A) and the component (B), the component (A) and the component (B) may be produced separately and mixed later, or may be produced simultaneously. In the case where the component (A) and the component (B) are produced simultaneously, the weight-average molecular weights, the ratio of the weight-average molecular weights, and the contents of the component (A) and the component (B) can be controlled, for example, by adjusting the kind and the addition amount of a coupling agent described later. Further, the weight-average molecular weights, the ratio of the weight-average molecular weights, and the contents of the component (A) and the component (B) can also be controlled by adding the polymerization initiator described later in a plurality of times and adjusting the addition amount and the number of times of addition of a polymerization. Further, the weight-average molecular weights, the ratio of the weight-average molecular weights, and the contents of the component (A) and the component (B) can also be controlled by adjusting the addition amount of a deactivating agent described later in a deactivation step, which is carried out in the process of the polymerization reaction. Hereinafter, each step will be described.

(Polymerization step)

The polymerization step is a step of polymerizing at least a conjugated diene compound monomer and a vinyl aromatic hydrocarbon monomer, with an organolithium compound as a polymerization initiator in a hydrocarbon solvent to thereby obtain a polymer.

The polymerization reaction temperature is usually 10 to 150°C, preferably 30 to 130°C, and more preferably 40°C to 100°C. The polymerization pressure is not especially limited as long as it is within a pressure range sufficient to maintain monomers and solvents in a liquid phase at the above polymerization temperature range. Although the polymerization reaction time depends on the conditions, it is usually within 48 hours and preferably 0.5 to 10 hours.

<The hydrocarbon solvent>

As described above, in the polymerization step, a hydrocarbon solvent is preferably used. The hydrocarbon solvent is not especially limited, but examples thereof include aliphatic hydrocarbons such as butane, pentane, hexane, isopentane, heptane and octane; alicyclic hydrocarbons such as cyclopentane, methylcyclopentane, cyclohexane, methylcyclohexane and ethylcyclohexane; aromatic hydrocarbons such as benzene, toluene, ethylbenzene and xylene. The hydrocarbon solvent may be used singly or as a mixture of two or more.

<The polymerization initiator>

In the polymerization step, as the polymerization initiator, at least an organolithium compound is preferably used. The organolithium compound is not especially limited, but examples thereof include organic monolithium compounds, organic dilithium compounds and organic polylithium compounds, which have one or more lithium atoms bound in their molecules. More specifically, the organolithium compounds include ethyllithium, n-propyllithium, isopropyllithium, n-butyllithium, sec-butyllithium, tert-butyllithium, hexamethylenedilithium, butadienyldilithium and isoprenyllithium. The polymerization initiator may be used singly or in combinations of two or more.

The polymerization initiator may be added to a reaction solution in a plurality of times. By doing so, a composition containing a plurality of block copolymers with different weight-average molecular weights and structures can be obtained at one time.

<Monomers to be used for the polymerization>

The conjugated diene compound monomer is a diolefin having a pair of conjugated double bonds. The conjugated diene compound monomer is not especially limited, but examples thereof include 1,3-butadiene, 2-methyl-1,3-butadiene (isoprene), 2,3-dimethyl-1,3-butadiene, 1,3-pentadiene, 2-methyl-1,3-pentadiene and 1,3-hexadiene. Among these, 1,3-butadiene and isoprene are preferable. Further, from the viewpoint of improving the holding power of the pressure-sensitive adhesive composition, 1,3-butadiene is more preferable. The conjugated diene compound monomer may be used singly or in combinations of two or more.

The vinyl aromatic hydrocarbon monomer is not especially limited, but examples thereof include styrene, $\alpha$-methylstyrene, p-methylstyrene, divinylbenzene, 1,1-diphenylethylene, N,N-dimethyl-p-aminoethylstyrene and N,N-diethyl-p-aminoethylstyrene. Among these, from the viewpoint of the economic efficiency, styrene is preferable. The vinyl aromatic hydrocarbon monomer may be used singly or in combinations of two or more.

The block copolymer may contain monomer units other than the vinyl aromatic hydrocarbon monomer unit and the conjugated diene compound monomer unit; and in the polymerization step, in addition to the vinyl aromatic hydrocarbon monomer and the conjugated diene compound monomer, other monomers copolymerizable with these monomers can be used.

In the polymerization step, for the purpose of control of the polymerization speed, the micro structure (the ratios of cis, trans and vinyl) of the polymerized conjugated diene compound monomer unit, the reaction ratio of the conjugated diene compound monomer and the vinyl aromatic hydrocarbon monomer, and the like, a polar compound and randomizing agent can be used.

The polar compound and the randomizing agent are not especially limited, but examples thereof include ethers such as tetrahydrofuran, diethylene glycol dimethyl ether and diethylene glycol dibutyl ether; amines such as triethylamine and tetramethylethylenediamine; thioethers, phosphines, phosphoramides, alkylbenzene sulfonate salts, and alkoxides of potassium or sodium.

<The coupling agent>

In the polymerization step, a coupling agent having a structure represented by X in the above formulae (iv) to (vi) and (x) to (xiii) may be added to a solution containing the vinyl aromatic-conjugated diene block copolymer having an active end in an amount such that the functional group of the coupling agent is less than 1 molar equivalent to the active end.

The coupling agent to be added is not especially limited, but an optional bi- or more functional coupling agent can be used. The bifunctional coupling agent is not especially limited, but examples thereof include bifunctional halogenated silanes such as dichlorosilane, monomethyldichlorosilane and dimethyldichlorosilane; bifunctional alkoxysilanes such as diphenyldimethoxysilane, diphenyldiethoxysilane, dimethyldimethoxysilane and dimethyldiethoxysilane; bifunctional halogenated alkanes such as dichloroethane, dibromoethane, methylene chloride and dibromomethane; bifunctional halogenated tins such as tin dichloride, monomethyltin dichloride, dimethyltin dichloride, monoethyltin dichloride, diethyltin dichloride, monobutyltin dichloride and dibutyltin dichloride; and dibromobenzene, benzoic acid, CO, and 2-chloropropene.

The trifunctional coupling agent is not especially limited, but examples thereof include trifunctional halogenated alkanes such as trichloroethane and trichloropropane; trifunctional halogenated silanes such as methyltrichlorosilane and ethyltrichlorosilane; trifunctional alkoxysilanes such as methyltrimethoxysilane, phenyltrimethoxysilane and phenyltriethoxysilane; and the like.

The tetrafunctional coupling agent is not especially limited, but examples thereof include tetrafunctional halogenated alkanes such as carbon tetrachloride, carbon tetrabromide and tetrachloroethane; tetrafunctional halogenated silanes such as tetrachlorosilane and tetrabromosilane; tetrafunctional alkoxysilanes such as tetramethoxysilane and tetraethoxysilane; tetrafunctional halogenated tins such as tetrachlorotin and tetrabromotin; and the like.

The penta- or higher functional coupling agent is not especially limited, but examples thereof include 1,1,1,2,2-pentachloroethane, perchloroethane, pentachlorobenzene, perchlorobenzene, octabromodiphenyl ether and decabromodiphenyl ether. Besides, there can also be used epoxidized soybean oils, bi- to hexafunctional epoxy group-containing compounds, carboxylate esters, and polyvinyl compounds such as divinylbenzene. The coupling agent may be used singly or in combinations of two or more.

Among the above, from the viewpoints of the color tone and the suppression of adverse influence on plants, halogen-free coupling agents are preferable. Further, the coupling agent is, from the viewpoints of the productivity and the suppression of adverse influence on plants, preferably an epoxy group-containing compound or an alkoxysilane.

As described above, when the coupling agent is added to a solution containing the vinyl aromatic-conjugated diene block copolymer having active ends in an amount such that the functional group of the coupling agent is less than 1 molar equivalent to the active ends, in someparts of block copolymers of the vinyl aromatic-conjugated diene block copolymer having active ends, the active ends are bound with each other through residues of the coupling agent. Further, the remaining parts of the vinyl aromatic-conjugated diene block copolymer having active ends remain in the solution still in their unreacted state. In the reaction using such a coupling agent, by adjusting the kind and the addition amount of the coupling agent, the coupling rate can be controlled.

A polymerization method to be carried out in the polymerization step in the production method of the polymer according to the present embodiment is not especially limited, and well-known methods can be applied; and examples of the methods include methods described in Japanese Patent Publication Nos. 36-19286, 43-17979, 46-32415, 49-36957, 48-2423, 48-4106 and 56-28925, Japanese Patent Laid-Open Nos. 59-166518 and 60-186577, and the like.

<The deactivating agent>

In the polymerization step, a deactivating agent may be added. The deactivating agent is not especially limited, but water, alcohols and the like are known. Among these, from the viewpoint of the deactivating efficiency, alcohols are preferable. The deactivating agent may be added at any timing in the polymerization step. In the case where the amount of the deactivating agent added is smaller amount than 100mol% of the active ends, the conjugated diene compound monomer and/or the vinyl aromatic hydrocarbon monomer may be further successively added after the addition of the deactivating agent. By doing so, there continues the polymerization reaction of the active ends not having been deactivated with the conjugated diene compound monomer and/or the vinyl aromatic hydrocarbon monomer, and a polymer solution containing polymers having different molecular weights can be obtained.

Further, in the case of a block copolymer composition comprising block copolymers having two different structures of the component (A) and the component (B), the contents of the component (A) and the component (B) can be controlled by adjusting the addition molar amount of the deactivating agent relative to the addition amount of the polymerization initiator in the deactivation step. It is likely that the larger the molar amount of the deactivating agent to be added, the higher the content of the component (A) becomes; and the smaller the molar amount of the deactivating agent to be added, the lower the content of the component (B) becomes.

Further, by adding the conjugated diene compound monomer and/or the vinyl aromatic hydrocarbon monomer after the addition of the deactivating agent, and continuing the polymerization reaction, the weight-average molecular weights of the component (A) and the component (B), and the ratio thereof can be controlled. Specifically, it is likely that the larger the amount of the conjugated diene compound monomer and/or the vinyl aromatic hydrocarbon monomer to be added after the addition of the deactivating agent, the higher the weight-average molecular weight of the component (B) becomes, and in association with this, the ratio of the weight-average molecular weights becomes higher.

(Hydrogenation step)

The production method of a block copolymer may include a hydrogenation step. The hydrogenation step is a step of making the polymer obtained in the polymerization step into a hydrogenated product by hydrogenating double bonds at least in the conjugated diene compound monomer of the polymer. Specifically, by hydrogenating the polymer in an inactive solvent in the presence of a hydrogenation catalyst, a hydrogenated block copolymer solution can be obtained. At this time, the degree of hydrogenation of the block copolymer can be controlled by adjusting the reaction temperature, the reaction time, the amount of hydrogen to be supplied, the amount of the catalyst, and the like.

The catalyst to be used in the hydrogenation reaction is not especially limited, but there are known, for example, (1) supported type heterogeneous catalysts in which a metal such as Ni, Pt, Pd or Ru is supported on a carrier such as carbon, silica, almina or diatomaceous earth, and (2) homogeneous catalysts such as so-called Ziegler catalysts in which an organic salt or an acetylacetone salt of Ni, Co, Fe, Cr or the like is used with a reducing agent such as an organoaluminum, so-called organic complex catalysts such as organometal compounds of Ru, Rh or the like, and catalysts in which a titanocene compound is used with a reducing agent such as an organolithium, an organoaluminum, an organomagnesium or the like. Among these, from the viewpoint of the economic efficiency, the color of the polymer or the adhesive strength, homogeneous catalysts in which a titanocene compound is used with a reducing agent such an organolithium, an organoaluminum, an organomagnesium or the like are preferred.

The hydrogenation reaction temperature is preferably from 0 to 200°C, and more preferably from 30 to 150°C. The pressure of hydrogen to be used in the hydrogenation reaction is preferably from 0.1 to 15 MPa, more preferably 0.2 to 10 MPa, and still more preferably from 0.3 to 5 MPa. Further, the hydrogenation reaction time is preferably from 3 min to 10 hours, and more preferably from 10 min to 5 hours. Here, the hydrogenation reaction may be a batch process, a continuous process, or a combination thereof.

A hydrogenation method is not especially limited, but examples thereof include methods described in Japanese Patent Publication Nos. 42-8704, 43-6636, 63-4841 and 63-5401.

The hydrogenation reaction is, though being not especially limited, preferably carried out after a step of deactivating the active ends of the polymer described above, from the viewpoint of high hydrogenation activity.

(Solvent removal step)

The solvent removal step is a step of removing the hydrocarbon solvent in the solution containing the polymer. A solvent removal method is not especially limited, but examples thereof include methods of removing the solvent by steam stripping or direct solvent removal. The use of steam stripping is preferable because it facilitates the control of the specific surface area; the cumulative pore volume of pores having a pore radius of 1 to 100 $\mu$m; the average pore radius; the value obtained by dividing the maximum value of a log differential pore intrusion volume at a pore radius of 1 $\mu$m or larger and 100 $\mu$m or smaller by the maximum value of a log differential pore intrusion volume at a pore radius of 0.001 $\mu$m or larger and smaller than 1 $\mu$m ((the maximum value of a log differential pore intrusion volume at a pore radius of 1 $\mu$m or larger and 100 $\mu$m or smaller)/(the maximum value of a log differential pore intrusion volume at a pore radius of 0.001 $\mu$m or larger and smaller than 1 $\mu$m)); and the value obtained by dividing the cumulative pore volume of pores having a pore radius of 1 to 100 $\mu$m by the cumulative pore volume of pores having a pore radius of 0.001 $\mu$m or larger and 100 $\mu$m ((the cumulative pore volume of pores having a pore radius of 1 $\mu$m to 100 $\mu$m)/(the cumulative pore volume of pores having a pore radius of 0.001 $\mu$m to 100 $\mu$m)) of the eventually obtained crumb.

The amount of the remaining solvent in the block copolymer obtained by the production method of the block copolymer described above is preferably 2mass% or smaller, more preferably 0.5mass% or smaller, still more preferably 0.2mass% or smaller, further still more preferably 0.05mass% or smaller, and especially preferably 0.01mass% or smaller.

(Crumbing step)

The aqueous slurry obtained by steam stripping or the like, in which the crumb of the obtained block copolymer is dispersed in water, is subjected to dehydration/drying treatments through the following processes, and thereby the crumb of the block copolymer can be recovered.

As recovery steps of recovering the crumb of a block copolymer, it is preferable to perform <process 1> of a dehydration treatment, <process 2> of a dehydration treatment and a drying treatment, and <process 3> of a drying treatment described later.

<Process 1>

In <process 1>, it is preferable that the above-mentioned aqueous slurry obtained by steam stripping or the like is subjected to a dehydration treatment to obtain a crumb having a moisture content of higher than 40mass% and 70mass% or lower. The moisture content of the crumb after undergoing <process 1> is more preferably from 42mass% to 68mass%, and more preferably from 44mass% to 65mass%. Such a dehydration treatment in <process 1> can be performed, for example, with a rotary screen, a vibrating screen, a centrifugal dehydrator, or the like. When the moisture content of the obtained crumb is higher than 40mass%, a decrease of polymer flowability in an extruder in <process 2> described later can be suppressed, and when the moisture content is 70mass% or lower, heat load on the polymer crumb can be suppressed in an extruder in process 2 described later can be suppressed.

<Process 2>

As described above, it is preferable that the crumb that has undergone a dehydration treatment in <process 1> to have a predetermined moisture content is subjected to a dehydration treatment and a drying treatment in <process 2> and transferred to <process 3> described later. The moisture content of the crumb after undergoing <process 2> is preferably from 3 to 25mass%, more preferably from 3 to 20mass%, still more preferably from 3 to 19mass%, and further still more preferably from 3.2 to 18mass%. The dehydration treatment and the drying treatment may be respectively performed with apparatuses that are independent from each other, and may be performed with a so-called integrated extrusion dryer equipped with a dehydration treatment means and a drying treatment means that are in communication with each other. The extrusion dryer is an apparatus that performs a dehydration treatment and a drying treatment and that is equipped with a dehydration treatment means and a drying treatment means. An extruder (an extruder-type water press) is employed as the dehydration treatment means, and a kneader-type dryer, a screw-type expander drier, or the like is employed as the drying treatment means. In particular, an apparatus configured to be equipped with a uniaxial or polyaxial, e.g., biaxial, screw-type extruder as the dehydration treatment means and equipped with a screw-type dryer as the drying treatment means is preferable from the viewpoints of dehydration efficiency and workability. To control the dehydration of a crumb moderately, a combination of a uniaxial, screw-type extruder with a screw-type dryer is especially preferable.

Further, the apparatus for performing <process 2>, such as the dehydration apparatus, the drying apparatus, and the extrusion dryer in which a dehydration treatment means and a drying treatment means are integrated, specifically including a screw-type extruder, a screw-type dryer, an integrated screw extruder-type dryer, may be equipped with a vent mechanism or a dehydration slit depending on the intended use.

With the moisture content of the crumb being 3mass% or higher by <process 2>, the gelation and/or the degradation of the crumb caused by the shearing force of an extruder can be prevented, and with the moisture content being 25mass% or lower by <process 2>, the moisture content of the obtained crumb can be easily controlled to 1mass% or lower by <process 3> described later.

In the case of performing the dehydration treatment and the drying treatment respectively with separate apparatuses in <process 2>, it is preferable that the discharge port temperature of the apparatus for performing the dehydration treatment is 120°C or lower and the discharge port temperature of the apparatus for performing the drying treatment is 120°C or higher and lower than 175°C, and more preferably 120 or higher and 170°C or lower. In the case of treatment with an extrusion dryer having a so-called two-stage configuration in which the dehydration treatment means and the drying treatment means are integrated, it is preferable that the discharge port temperature of the first stage is 120°C or lower, and the discharge port temperature of the second stage is 120°C or higher and lower than 175°C, and more preferably 120°C or higher and 170°C or lower.

Further, from the viewpoint of the crumb shape, the value of (the production rate at the discharge port of the drying apparatus in <process 2>)/(the area of die plate openings) is preferably adjusted so as to be relatively large and the value is preferably, but is not especially limited to, 0.6 (kg/h)/mm$^2$, more preferably 0.65 (kg/h)/mm$^2$ or greater, and still more preferably 0.7 (kg/h)/mm$^2$ or greater. Although the upper limit is not especially specified, the upper limit is preferably 20 (kg/h)/mm$^2$ or lower and preferably 10 (kg/h)/mm$^2$ or lower.

Here, the production rate at the discharge port of the drying apparatus in <process 2> refers to a continuous throughput (kg) from <process 2> per unit time, and the area of die plate openings refers to the sum of the areas of openings of all dies irrespective of whether only one die is used or multiple dies are used.

The shape of die openings is not especially limited, but examples thereof include rectangular and triangular shapes and various shapes obtained by combining multiple rectangles or circles, and specific examples include a T shape, a cross shape, a Y shape, a U shape, a vertically elongated rectangle and a star shape.

The shape of die openings is preferably such that the diameter of a circle circumscribing the die opening is 0.5 mm or larger and more preferably 1 mm or larger. Further, it is preferably 20 mm or smaller, and more preferably 10 mm or smaller.

<Process 3>

As described above, it is preferable that in <process 3>, a drying treatment is performed with a hot-air dryer on the crumb obtained in <process 2> to provide a crumb having a moisture content of 1 mass% or lower. The moisture content of the crumb after undergoing <process 3> is preferably 1mass% or lower, more preferably 0.95mass% or lower, and still more preferably 0.9mass% or lower. With the moisture content of the crumb dried through <process 3> being 1mass% or lower, there are such effects that foaming during the production of a pressure-sensitive adhesive composition can be prevented.

The moisture content of the crumb of a block copolymer can be determined by a method to be described in Examples described later. It is preferable to adjust the moisture content of the crumb after the dehydration treatment of <process 1 > to the above range, and it is more preferable to adjust the discharge port temperatures in the respective apparatuses and the moisture content of the crumb at the discharge ports to the above ranges in <process 1> to <process 3>. By adjusting the moisture content of the crumb in each process to the above range, the flowability of the crumb is increased, and a moderately foamed crumb can be obtained.

The block copolymer crumb according to the present embodiment has a specific surface area of 0.000001 $m^2$/g or larger and smaller than 0.3 $m^2$/g, a cumulative pore volume of pores having a pore radius of 1 $\mu$m to 100 $\mu$m of 0.05 mL/g or larger and smaller than 1.0 mL/g, and an average pore radius of 0.00001 $\mu$m or larger and 1.5 $\mu$m or smaller. Further, (the cumulative pore volume of pores having a pore radius of 1 $\mu$m to 100 $\mu$m)/(the cumulative pore volume of pores having a pore radius of 0.001 $\mu$m to 100 $\mu$m) is preferably 0.3 to 0.8. In order to obtain such a crumb, it is particularly effective to adjust the moisture content at a stage prior to <process 2> and optimize the dehydration and drying conditions in <process 2>. Specifically, the moisture content of the crumb after undergoing <process 1> is preferably higher than 40mass% and 70mass% or lower as described above. When this moisture content is excessively low, the crumb becomes excessively dehydrated in <process 2>, and the flowability is impaired. On the other hand, when the moisture content is excessively high, the dehydration and drying treatments cannot be stably performed in <process 2>, and a favorable flowability is not obtained. Further, the moisture content of the crumb after the dehydration treatment and the drying treatment of <process 2> is preferably 3mass% or higher and 25mass% or lower. When this moisture content of the crumb is excessive high, the load in <process 3> is large, and when this moisture content of the crumb is excessively low, the flowability of the crumb is deteriorated, and foaming occurs unevenly, and thus the desired crumb shape cannot be obtained. Further, in the dehydration treatment and the drying treatment of <process 2>, the discharge port temperature of the apparatus for the dehydration treatment is preferably 120°C or lower, and the discharge port temperature of the apparatus for the drying treatment is preferably 120°C or higher and lower than 175°C. When each discharge port temperature of <process 2> is excessive high, the crumb becomes excessively dry, and thus the flowability of the crumb is deteriorated, foaming occurs unevenly, and the desired crumb shape may not be obtained.

Further, by adjusting the moisture content of the crumb after undergoing <process 1>, by adjusting the discharge port temperature of the apparatus for the dehydration treatment in the dehydration treatment and the drying treatment of <process 2> to 120°C or lower, by adjusting the discharge port temperature of the apparatus for the drying treatment (the discharge port temperature of the drying treatment means in an apparatus in which the dehydration treatment means and the drying treatment means are integrated) to 120°C or higher and lower than 175°C, by adjusting the moisture content of the crumb after undergoing <process 3> to the above range and by adjusting (the production rate in <process 2>)/(the area of die plate openings) to the above range, the dehydration treatment and the drying treatment can be stably performed to obtain the crumb of a block copolymer of the present embodiment having a desired specific surface area, average pore radius, and cumulative pore volume of pores having a pore diameter of 1 to 100 $\mu$m, that is capable of providing excellent pressure-sensitive adhesive property and the pressure-sensitive adhesive composition containing the same.

In order for the value obtained by dividing the maximum value of a log differential pore intrusion volume at a pore radius of 1 $\mu$m or larger and 100 $\mu$m or smaller by the maximum value of a log differential pore intrusion volume at a pore radius of 0.001 $\mu$m or larger and smaller than 1 $\mu$m ((the maximum value of a log differential pore intrusion volume at a pore radius of 1 $\mu$m to 100 $\mu$m)/(the maximum value of a log differential pore intrusion volume at a pore radius of 0.001 $\mu$m or larger and smaller than 1 $\mu$m)) to be 0.1 to 2 and for the cumulative pore volume to be 0.0001 mL/g or larger and 0.6 mL/g or smaller, the moisture content of the crumb that has undergone <process 2> is preferably from 3 to 20mass%, and in <process 2> the temperature of the discharge port of the apparatus for drying treatment or the drying treatment means in an apparatus in which the dehydration treatment means and the drying treatment means are integrated is preferably 170°C or lower.

From the viewpoint of handleability, in the crumb of a block copolymer according to the present embodiment, it is preferable that the total amount of crumbs having a size larger than 0 $\mu$m and 2 $\mu$m or smaller and crumbs having a size larger than 5.6 $\mu$m with respect to the whole amount of the crumbs is 20mass% or smaller. The size of the crumb of a block copolymer can be measured using a shaker and a plurality of sieves. That is to say, sieves having mesh openings of 6.7 mm, 5.6 mm, 4.0 mm, 3.35 mm, 2.0 mm and 0.85 mm are stacked in a shaker in order from the smallest to the largest mesh opening, a polymer is placed on the sieve with the largest mesh opening and shaken in an amplitude of 1.5 mm for 3 min, and crumbs remain on each sieve are weighed to make calculations.

Further, from the viewpoints of the heat aging resistance and the suppression of gelation of the crumb of the block copolymer according to the present embodiment, it is preferable that an antioxidant is added. The antioxidant is not especially limited, but examples thereof include phenolic antioxidants of radical scavengers, and phosphorus-based antioxidants and sulfur-based antioxidants of peroxide decomposing agents. Further, an antioxidant that functions as both a radical scavenger and a peroxide decomposing agent may be used. These may be used singly or in combinations of two or more. Among these, from the viewpoints of the heat aging resistance and the suppression of gelation of the polymer, the addition of at least a phenolic antioxidant is preferable.

Further, from the viewpoints of preventing coloration of the polymer and achieving a high mechanical strength, it is possible to add a deashing step of removing metals in the polymer, and a neutralization step of adjusting the pH of the polymer, for example, addition of an acid or addition of carbon dioxide gas.

The block copolymer constituting the crumb according to the present embodiment that can be produced as described above may contain modified polymers in which polar group-containing functional groups containing atoms selected from nitrogen, oxygen, silicon, phosphorus, sulfur and tin are bound to the block copolymer, and modified block copolymers in which the block copolymer is modified with a modifier such as maleic anhydride. Such modified block copolymers are obtained by carrying out a well-known modification reaction on the block copolymer obtained by the above-mentioned method.

A method for adding these functional groups to the block copolymer is not especially limited, but examples thereof include methods of adding the functional groups to the polymer by using compounds having the functional groups as an initiator, monomers, a coupling agent or a terminating agent.

The initiator having a functional group is preferably one containing a nitrogen atom, and includes dioctylaminolithium, di-2-ethylhexylaminolithium, ethylbenzylaminolithium, (3-(dibutylamino)-propyl)lithium and piperidinolithium.

Further, the monomer having a functional group includes compounds obtained by introducing a hydroxide group, an acid anhydride group, an epoxy group, an amino group, an amide group, a silanol group or an alkoxysilane group to the above-mentioned monomer to be used in the polymerization. Among these, monomers containing a group having a nitrogen atom are preferable, and examples include, but are not limited to, N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine and 1-(4-vinylbenzyloxymethyl)pyrrolidine.

Further, the coupling agent and the terminating agent having a functional group include, among the above-mentioned coupling agents, compounds having a hydroxide group, an acid anhydride group, an epoxy group, an amino group, an amide group, a silanol group or an alkoxysilane group. Among these, coupling agents containing a group having a nitrogen atom and a group having an oxygen atom are preferable, and examples include, but are not limited to, tetraglycidylmetaxylenediamine, tetraglycidyl-1,3-bisaminomethylcyclohexane, tetraglycidyl-p-phenylenediamine, tetraglycidyldiaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropylene urea and N-methylpyrrolidone.

[Pressure-sensitive adhesive composition]

The pressure-sensitive adhesive composition according to the present embodiment comprises 100 parts by mass of the above-mentioned polymer comprising a crumb of a block copolymer, 20 to 500 parts by mass of a tackifier, and 0 to 300 parts by mass of a softener. The pressure-sensitive adhesive composition according to the present embodiment has excellent adhesive power, tack and holding power, and is excellent in the pressure-sensitive adhesive property, the low-viscosity property, texture, and in the balance thereamong.

Here, in the case where the pressure-sensitive adhesive composition comprises a styrene-butadiene-based block copolymer, a styrene-isoprene-based block copolymer, a hydrogenated styrene-butadiene-based block copolymer, a hydrogenated styrene-isoprene-based block copolymer, a styrene-butadiene-isoprene-based block copolymer, a hydrogenated styrene-butadiene-isoprene-based block copolymer and the like other than the block copolymer constituting the crumb according to the present embodiment, the pressure-sensitive adhesive composition comprises from 20 to 500 parts by mass of a tackifier described later, and from 0 to 300 parts by mass of a softener described later, with respect to 100 parts by mass of the total of the block copolymers other than the present embodiment and the block copolymer crumb according to the present embodiment,.

Here, according to use applications, it is preferable that the weight-average molecular weight of the block copolymer, e.g., the components (A) and (B) in the block copolymer, is selected, and the blend amount of each component of the tackifier, the softener and the like is adjusted.

(Tackifier)

The tackifier can be selected in a wide variety according to use applications and required performance of the obtained pressure-sensitive adhesive composition. Here, in the present description, the tackifier does not correspond to the polymer of the crumb of a block copolymer according to the present embodiment. The tackifier is not especially limited, and the examples include rosin-based compounds such as natural rosin, modified rosin, glycerol esters of natural rosin, glycerol esters of modified rosin, pentaerythritol esters of natural rosin, pentaerythritol esters of modified rosin, hydrogenated rosin and pentaerythritol esters of hydrogenated rosin; terpene-based compounds such as copolymers of natural terpene, three-dimensional polymers of natural terpene, aromatic-modified terpene resins, hydrogenated derivatives of aromatic-modified terpene resins, terpene phenol resins, hydrogenated derivatives of terpene phenol resins, terpene resins (monoterpene, diterpene, triterpene, polyterpene and the like) and hydrogenated terpene resins; and petroleum hydrocarbon-based compounds such as aliphatic petroleum hydrocarbon resins (C5-based resins), hydrogenated derivatives of aliphatic petroleum hydrocarbon resins, aromatic petroleum hydrocarbon resins (C9-based resins), hydrogenated derivatives of aromatic petroleum hydrocarbon resins, dicyclopentadiene-based resins, hydrogenated derivatives of dicyclopentadiene-based resins, C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. These tackifiers can be used singly or in combinations of two or more.
As the tackifier, a liquid tackifier resins which are colorless or light yellow in color tone, substantially free from odor, and good in thermal stability can be used.
Hereinafter, tackifiers preferred according to use applications and required performance will be described more specifically.

(Tackifiers of hydrogenated derivatives)

From the viewpoints of reduced coloration and odor, the tackifier is preferably hydrogenated derivatives. The hydrogenated derivatives are not especially limited, but examples thereof include hydrogenated derivatives of aromatic-modified terpene resins, hydrogenated derivatives of terpene phenol resins, hydrogenated derivatives of aliphatic petroleum hydrocarbon resins (C5-based resins), hydrogenated derivatives of aromatic petroleum hydrocarbon resins (C9-based resins), hydrogenated derivatives of dicyclopentadiene-based resins, hydrogenated derivatives of C5/C9 copolymer-based resins and hydrogenated derivatives of alicyclic petroleum hydrocarbon resins. Among these, hydrogenated derivatives of aromatic petroleum hydrocarbon resins (C9-based resins) and hydrogenated derivatives of dicyclopentadiene-based resins are especially preferred. Commercially available products of such hydrogenated derivatives are not especially limited, but include Arkon P90, Arkon P100, Arkon P115, Arkon P125, Arkon P140 (trade names), Arkon M90, Arkon M100, Arkon M115, Arkon M135 (trade names), Ester Gum H, Ester Gum HP (trade names), and Hypale (trade name) manufactured by Arakawa Chemical Industries, Ltd., Regalite R1010, Regalite R1090, Regalite R1100, Regalite S5100, Regalite R7100, Regalite C6100 (trade names), Easttack C100W, Easttack C100L, Easttack C100R, Easttack C115W, Easttack C115R (trade names), Staybelite E (trade name), Foral AXE (trade name), and Staybelite Ester 10E (trade name) manufactured by Eastman Chemical Co., Clearon P (trade name), Clearon M (trade name), Clearon K (trade name), and YS Polystar UH (trade name) manufactured by Yasuhara Chemical Co., Ltd., Escorez 5340, Escorez 5320, Escorez 5300, Escorez 5380, Escorez 5400, Escorez 227E, Escorez 5600, and Escorez 5690 (trade names) manufactured by Exxon Mobil Corp., Quintone A100, Quintone B170, Quintone M100, Quintone R100, Quintone S195, Quintone D100, Quintone U185, Quintone DX395, Quintone 390N, Quintone N180, Quintone G100B, Quintone G115, Quintone E200SN, Quintone D200, Quintone 1105, Quintone 1325, and Quintone 1340 (trade names) manufactured by Zeon Corp., I-MARV S100, I-MARV S110, I-MARV P100, I-MARV P125, and I-MARV P140 (trade names) manufactured by Idemitsu Kosan Co., Ltd, and Rikarosin F (trade name) manufactured by Rika Fine-tech Inc.

(Tackifiers other than hydrogenated derivatives)

Tackifiers other than hydrogenated derivatives are not especially limited, but examples thereof include natural rosin, modified rosin, glycerol esters of natural rosin, glycerol esters of modified rosin, pentaerythritol esters of natural rosin and pentaerythritol esters of modified rosin; copolymers of natural terpene, three-dimensional polymers of natural terpene, aromatic-modified terpene resins, terpene phenol resins and terpene resins; and aliphatic petroleum hydrocarbon resins (C5-based resins), aromatic petroleum hydrocarbon resins (C9-based resins), dicyclopentadiene-based resins, C5/C9 copolymer-based resins and alicyclic petroleum hydrocarbon resins. Among these, preferable are aliphatic petroleum hydrocarbon resins (C5-based resins), aromatic petroleum hydrocarbon resins (C9-based resins), C5/C9 copolymer-based resins, alicyclic petroleum hydrocarbon resins, terpene resins, natural and modified rosin esters, and mixtures thereof. Commercially available products include Ester Gum AA-L, Ester Gum A, Ester Gum AAV, Ester Gum, Ester Gum 105, Ester Gum AT, Pensel A, Pensel AZ, Pensel C, Pensel D125, Pensel D160 (trade names), Super Ester (trade name), Tamanol (trade name), Pinecrystal (trade name), and Ardyme (trade name) manufactured by Arakawa Chemical Industries, Ltd., Wingtack 10, Wingtack 95, Wingtack 98, Wingtack Extra, Wingtack RWT-7850, Wingtack PLUS, Wingtack ET, Wingtack STS, Wingtack 86 (trade names), and Norsolnene (product name) manufactured by Cray Valley, Piccotac 8095, Piccotac 1095, Piccotac 1098, and Piccotac 1100 (trade names) manufactured by Eastman Chemical Co., Escorez 1102, Escorez 1202, Escorez 1204LS, Escorez 1304, Escorez 1310, Escorez 1315, Escorez 224, Escorez 2101, Escorez 213, and Escorez 807 (trade names) manufactured by ExxonMobil Chemicals Co., Sylvagum (trade name) and Sylvalite (trade name) manufactured by Arizona Chemical Co., Piccolyte (trade name) manufactured by Ashland Inc, YS Resin PX (trade name), YS Resin PXN (trade name), YS Polystar U (trade name), YS Polystar T (trade name), YS Polystar S (trade name), YS Polystar G (trade name), YS Polystar N (trade name), YS Polystar K (trade name), YS Polystar TH (trade name), YS Resin TO (trade name), YS Resin TR (trade name), and YS Resin SX (trade name) manufactured by Yasuhara Chemical Co., Ltd., and Marukarez M (trade name) manufactured by Maruzen Petrochemical Co., Ltd.

(Aliphatic-based tackifiers)

From the viewpoints of providing a pressure-sensitive adhesive composition having high tackiness and high holding power, and the economic efficiency, as the tackifier, aliphatic-based tackifiers are preferably used. The aliphatic-based tackifiers are not especially limited, but examples thereof include aliphatic petroleum hydrocarbon resins (C5-based resins), hydrogenated derivatives of aliphatic petroleum hydrocarbon resins (C5-based resins), C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. Here, the aliphatic-based tackifier refers to a tackifier having a content of aliphatic hydrocarbon group(s) of preferably 50mass% or higher, more preferably 70mass% or higher, still more preferably 80mass% or higher, further still more preferably 88mass% or higher, and further still more preferably 95mass% or higher. When the content of aliphatic hydrocarbon group(s) is in the above range, the tackiness, the holding power and the economic efficiency are likely to be further improved.

The aliphatic-based tackifier can be produced by homopolymerizing or copolymerizing a monomer having an aliphatic group and a polymerizable unsaturated group. The monomer having an aliphatic group and a polymerizable unsaturated group is not especially limited, but examples thereof include natural or synthetic terpenes having a C5 or C6, cyclopentyl or cyclohexyl group. Further, other monomers that can be used in the copolymerization are not especially limited, but examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpene and terpene phenol resins.

(Aromatic tackifiers)

From the viewpoint of providing a pressure-sensitive adhesive composition having high adhesive strength and high coatability, as the tackifier, aromatic tackifiers are preferably used. The aromatic tackifiers are not especially limited, but examples thereof include aromatic petroleum hydrocarbon resins (C9-based resins) and C5/C9 copolymer-based resins. Here, the aromatic tackifier refers to a tackifier having a content of aromatic hydrocarbon group(s) of preferably 50mass% or higher, more preferably 70mass% or higher, still more preferably 80mass% or higher, further still more preferably 88mass% or higher, and further still more preferably 95mass% or higher. When the content of aromatic hydrocarbon group(s) is in the above range, the adhesive power and the coatability are likely to be further improved.

The aromatic tackifier can be produced by homopolymerizing or copolymerizing a monomer having an aromatic group and a polymerizable unsaturated group. The monomer having an aromatic group and a polymerizable unsaturated group is not especially limited, but examples thereof include styrene, A-methylstyrene, vinyltoluene, methoxystyrene, tert-butylstyrene, chlorostyrene and an indene monomer (including methylindene). Further, other monomers that can be used in the copolymerization are not especially limited, but examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpene and terpene-phenol resins. Commercially available products thereof include Endex 155 (trade name), Kristalex 1120, Kristalex 3085, Kristalex 3100, Kristalex 5140, Kristalex F100 (trade names), Plastolyn 240, Plastolyn 290, and Piccotex 100 (trade name) manufactured by Eastman Chemical Co.

(Tackifiers having affinity for blocks of a glass phase (e.g., the polymer block (Ar)) and/or blocks of a non-glass phase (e.g., the polymer block (D)) of the block copolymer)

From the viewpoints of obtaining a pressure-sensitive adhesive composition having high adhesion, reduced adhesive strength change over time, good creep performance (the lower value the better), low melt viscosity, heat resistance and the like and the good balance thereamong, it is preferable that the pressure-sensitive adhesive composition comprises 20 to 75mass% of a tackifier having affinity for blocks of the non-glass phase (usually, middle blocks) of the block copolymer, and 0.1 to 30mass% of a tackifier having affinity for blocks (usually, outer-side blocks) of the glass phase of the block copolymer. Here, it is preferable that the block copolymer contains the above-mentioned components (A) and (B).

The tackifier having affinity for blocks of the non-glass phase of the block copolymer (e.g., the polymer block (D)) is not especially limited, but examples thereof include rosin-based compounds, terpene-based compounds, aliphatic petroleum hydrocarbon resins (C5-based resins), hydrogenated derivatives of aliphatic petroleum hydrocarbon resins, C5/C9 copolymer-based resins, hydrogenated derivatives of C5/C9 copolymer-based resins, alicyclic petroleum hydrocarbon resins, and hydrogenated derivatives of alicyclic petroleum hydrocarbon resins. The content of the tackifier having affinity for the non-glass phase of the block copolymer with respect to 100mass% of the pressure-sensitive adhesive composition is preferably 20 to 75mass%, more preferably 25 to 70mass%, and still more preferably 30 to 65mass%.

The tackifier having affinity for blocks of the glass phase of the block copolymer (e.g., the polymer block (Ar)) is not especially limited, but preferably are, for example, resins having an aromatic ring in their molecule. Such resins are not especially limited, but examples thereof include aromatic group-containing resins such as homopolymers or copolymers containing vinyltoluene, styrene, $\alpha$-methylstyrene, cumarone or indene as a constituting unit. Among these, preferable are Kristalex, Plastolyn and Piccotex (manufactured by Eastman Chemical Co., trade names) having $\alpha$-methylstyrene.

The content of the tackifier having affinity for blocks of the glass phase of the block copolymer with respect to 100mass% of the pressure-sensitive adhesive composition is preferably from 0.5 to 30mass%, more preferably from 1 to 20mass%, and still more preferably from 2 to 12mass%.

From the viewpoint of high initial adhesive strength, high wettability, low melt viscosity of the pressure-sensitive adhesive composition, high coatability or the like, it is preferable to use, as the tackifier, a petroleum resin having an aroma content of 3 to 12mass%. Such a petroleum resin is not especially limited, but examples thereof include aliphatic petroleum hydrocarbon resins (C5-based resins), hydrogenated derivatives of aliphatic petroleum hydrocarbon resins (C5-based resins), aromatic petroleum hydrocarbon resins (C9-based resins), hydrogenated derivatives of aromatic petroleum hydrocarbon resins (C9-based resins), dicyclopentadiene-based resins, hydrogenated derivatives of dicyclopentadiene-based resins, C5/C9 copolymer-based resins, hydrogenated derivatives of C5/C9 copolymer-based resins, alicyclic petroleum hydrocarbon resins and hydrogenated derivatives of alicyclic petroleum hydrocarbon resins. The aroma content of the petroleum resin is preferably from 3 to 12mass%, and more preferably from 4 to 10mass%. Among these, hydrogenated petroleum resins are especially preferable.

Further, in the case where a higher weather resistance (a reduced adhesive power change after UV irradiation) is necessary, the tackifier is preferably a hydrogenated tackifier resin. The "hydrogenated tackifier resin" refers to a tackifier resin obtained by hydrogenating an aliphatic tackifier resin containing an unsaturated bond or an aromatic tackifier resin containing an unsaturated bond to an intended degree of hydrogenation. A higher degree of hydrogenation is more preferable.

From the viewpoint of high initial adhesive strength, high wettability, low melt viscosity of the pressure-sensitive adhesive composition, high coatability or the like, it is preferable to use, as the tackifier, a styrene oligomer. The styrene oligomer is not especially limited, but includes aromatic petroleum hydrocarbon resins (C9-based resins) such as Piccolastic A5 and Piccolastic A75 (manufactured by Eastman Chemical Co., trade names).

The content of the styrene oligomer with respect to 100mass% of the pressure-sensitive adhesive composition is preferably 35mass% or lower, more preferably 30mass% or lower, and still more preferably 25mass% or lower.

From the viewpoints of obtaining a pressure-sensitive adhesive composition having extremely low odor, high weather resistance, high transparency, colorlessness, low thermal discoloration and the like, it is preferable to use, as the tackifier, hydrogenated resins (for example, the above hydrogenated derivatives).

The content of the tackifier with respect to 100 parts by mass of the polymer comprising the crumb of a block copolymer is 20 parts by mass or higher, preferably 30 parts by mass or higher, more preferably 50 parts by mass or higher, and still more preferably 75 parts by mass or higher. Further, the content of the tackifier with respect to 100 parts by mass of a polymer comprising the crumb of a block copolymer is 500 parts by mass or lower, preferably 400 parts by mass or lower, and more preferably 350 parts by mass or lower. Further, the content of the tackifier with respect to 100 parts by mass of the crumb of a block copolymer is from 20 to 500 parts by mass, preferably from 30 to 400 parts by mass, more preferably from 50 to 350 parts by mass, and still more preferably from 75 to 350 parts by mass. When the content of the tackifier is in the above range, the pressure-sensitive adhesive property is further improved.

In the case where the pressure-sensitive adhesive composition according to the present embodiment comprises the crumb of a block copolymer according to the present embodiment and other polymers, the content of the tackifier with respect to 100 parts by mass of the total of the crumb of a block copolymer according to the present embodiment and the other polymers is from 20 to 500 parts by mass, preferably from 30 to 400 parts by mass, more preferably from 50 to 350 parts by mass, and still more preferably 75 to 350 parts by mass. When the content of the tackifier is in the above range, the pressure-sensitive adhesive property is further improved.

(Softener)

The "softener" refers to an agent having functions of reducing the hardness and viscosity of the pressure-sensitive adhesive composition. Here, in the present description, the softener does not correspond to the polymer of the crumb of a block copolymer according to the present embodiment. The softener is not especially limited, but examples thereof include well-known petroleum-based oils such as paraffinic process oils, naphthenic process oils, aroma-based process oils, extender oils and mixed oils thereof; plant oils; plasticizers; synthetic liquid oligomers; and mixtures thereof.

Hereinafter, preferable softeners preferred according to use applications and required performance will be described more specifically.

From the viewpoints of the viscosity reduction, the tackiness improvement and the hardness reduction of the pressure-sensitive adhesive composition, as the softener, oils can be used. The oils are not especially limited, but include well-known paraffinic process oils, naphthenic process oils, aroma-based process oils, extender oils and mixed oils thereof. From the viewpoints of weather resistance, low-odor property, low-temperature property, aging resistance, contamination resistance, and color tone, paraffinic process oils are preferable; from the viewpoint of compatibility, aroma-based process oils are preferable; and from the viewpoint of the balance among economic efficiency, low-temperature property, aging resistance, contamination resistance, color tone, and compatibility, naphthenic process oils are preferable.

In the case where the pressure-sensitive adhesive composition is used as transdermal absorption formulations, from the viewpoints of improving the transdermal absorbability and the preservation stability, and enhancing the drug solubility to the pressure-sensitive adhesive composition, plasticizers can be used as the softener. The plasticizers are not especially limited, but examples thereof include liquid paraffin; fatty acid esters composed of higher fatty acids having from 12 to 16 carbon atoms, such as isopropyl myristate, ethyl laurate and isopropyl palmitate, and lower monohydric alcohols having 1 to 4 carbon atoms; fatty acids having 8 to 10 carbon atoms; glycols such as ethylene glycol, diethylene glycol, triethylene glycol, polyethylene glycol, propylene glycol and polypropylene glycol; oils and fats such as olive oil, castor oil, squalene and lanolin; organic solvents such as ethyl acetate, ethyl alcohol, dimethyl decyl sulfoxide, decyl methyl sulfoxide, dimethyl sulfoxide, dimethylformamide, dimethylacetamide, dimethyllaurylamide, dodecylpyrrolidone, isosorbitol, oleyl alcohol and lauric acid; liquid surfactants; and ethoxylated stearyl alcohol, glycerol esters, isotridecyl myristate, N-methylpyrrolidone, ethyl oleate, oleic acid, diisopropyl adipate, octyl palmitate, 1,3-propanediol, and glycerol. From among these, compounds liquid at normal temperature are used. Among these, glycerol esters are preferable; and more preferable are medium chain fatty acid triglycerides which are esters of fatty acids having 8 to 10 carbon atoms and glycerol. Examples of the medium chain fatty acid triglycerides include tri(caprylic acid/capric acid) glyceryl. The plasticizer may be used singly or in combinations of two or more.

In the case where the pressure-sensitive adhesive composition and pressure-sensitive adhesive tapes are used as medical pressure-sensitive adhesive tapes such as taping tapes, as the softener, combination use of liquid paraffin and other plasticizers are preferred.

The plasticizer is not especially limited, but includes dibasic acids such as DBP and DOP.

In the case where the pressure-sensitive adhesive composition and the pressure-sensitive adhesive tapes are used in medical applications, the addition amount of the liquid plasticizer with respect to 100mass% of the pressure-sensitive adhesive composition is preferably from 3 to 30mass%, more preferably from 3 to 20mass%, and still more preferably from 3 to 10mass%. When the addition amount of the liquid plasticizer is 3mass% or larger, the transdermal absorbability, the preservation stability, and the drug solubility to the pressure-sensitive adhesive composition are likely to be further improved. Further, when the addition amount of the liquid plasticizer is 30mass% or smaller, the cohesive force of the pressure-sensitive adhesive composition is likely to be further improved.

In the case where the pressure-sensitive adhesive composition is desired to be softer, from the viewpoint of improving the bleeding property, synthetic liquid oligomers can be used. The synthetic liquid oligomer, which may be referred to as liquid rubber, is not especially limited, but examples thereof include styrene oligomers, butadiene oligomers, isoprene oligomers, butene oligomers, and isobutylene oligomers.

In the case where a naturally occurring component is used as a softener, a vegetable oil is preferable. The vegetable oil is not especially limited, but includes castor oil, tall oil, and pine tar. From the viewpoint of cold-temperature resistance, castor oil is preferable.

Commercially available products of such softeners are not especially limited, but examples include Diana Fresia S32, Diana Process Oil PW-32, PW-90, PW-150, PS-430, Diana Process Oil NP-24, NR-26, NR-68, NS-90S, NS-100, NM-280, and Diana Process Oil AC-12, AC-640, AH-16, AH-24, and AH-58 (trade names) manufactured by Idemitsu Kosan Co., Ltd., White Oil Broom 350 (trade name) and DN Oil KP-68 (trade name) manufactured by Kukdong Oil & Chem Co., Ltd., Enerper M1930 (trade name) manufactured by BP Chemicals Ltd., Kaydol (trade name) manufactured by Crompton Corp., Primol 352 (trade name) manufactured by Esso Standard Petroleum Co., Ltd., KN4010 (trade name) manufactured by PetroChina Co., Syntac N-40, N-60, N-70, N-75 and N-80, Syntac PA-95, PA-100 and PA-140, and Syntac HA-10, HA-15, HA-30, HA-35 (trade names) manufactured by Kobe Oil Chemical Industrial Co., Ltd., JOMO Process P200, P300, P500 and 750, JOMO Process R25, R50, R200 and R1000, and JOMO Process X50, X100E and X140 (trade names) manufactured by Japan Energy Corp., Sunpar 110, 115, 120, 130, 150, 2100 and 2280, Sunthene Oil 310, 410, 415, 420, 430, 450, 380, 480, 3125, 4130 and 4240, JSO Aroma 790, and Nitprene 720L (trade names) manufactured by Japan Sun Oil Company Ltd., Fukkol Process P-100, P-200, P-300, P-400 and P-500, Fukkol New Flex 1060W, 1060E, 1150W, 1150E, 1400W, 1400E, 2040E and 2050N, Fukkol Aromax 1, 3 and 5, and EXP 1 (trade names) manufactured by Fuji Kosan Co., Ltd., Shell Flex 371JY (trade name) manufactured by Shell Japan, Petrex Process Oil PN-3, PN-3M and PN-3N-H (trade names) and Petrex Process Oil LPO-R, LPO-V and PF-2 (trade names) manufactured by Yamabun Oil Chemical Co., Ltd., and Cosmo Process 40, 40A, 40C, 200A, 100 and 1000 (trade names) manufactured by Cosmo Oil Lubricants Co., Ltd.

The content of the softener in the pressure-sensitive adhesive composition according to the present embodiment with respect to 100 parts by mass of the block copolymer composition is from 0 to 300 parts by mass, preferably from 10 to 175 parts by mass, and more preferably from 20 to 150 parts by mass. When the content of the softener is in the above range, the pressure-sensitive adhesive property is further improved.

Further, the content of the softener with respect to 100mass% of the total mass of the pressure-sensitive adhesive composition is preferably 35mass% or lower, and more preferably 3mass% or higher and 30mass% or lower. When the content of the softener is in the above range, the pressure-sensitive adhesive property is further improved.

In the case where the pressure-sensitive adhesive composition according to the present embodiment comprises the crumb of a block copolymer according to the present embodiment and other polymers, the content of the softener with respect to 100 parts by mass of the total of the crumb of a block copolymer and the other polymers is from 0 to 300 parts by mass, preferably from 10 to 175 parts by mass, and more preferably from 20 to 150 parts by mass. When the content of the softener is in the above range, the pressure-sensitive adhesive property is further improved.

(Other components)

The pressure-sensitive adhesive composition according to the present embodiment may contain, as required, polymers other than the above-mentioned crumb of a block copolymer [the crumb of a block copolymer block, comprising predetermined monomer units, having a weight-average molecular weight of from 20,000 to 1,000,000, and satisfying the requirements (a), (b) and (c)], waxes, polar group-containing polymers, stabilizers and microparticulate fillers, anti-static agents, lubricants, and the like.

(Other polymers)

Other polymers are not especially limited, but examples thereof include polyolefinic copolymers, vinyl aromatic elastomers and other rubbers. Here, in the present description, "other polymers" mean polymers that do not correspond to the crumb of a block copolymer block having a weight-average molecular weight of 20,000 to 1,000,000 and satisfying the requirements (a), (b) and (c) described as the block copolymer according to the present embodiment.

The polyolefins and polyolefin based copolymers are not especially limited, but examples thereof include polymers composed of one kind or two or more kinds of monomers such as ethylene, propylene, 1-butene, 1-pentene, 1-hexene, 4-methyl-1-pentene, 1-octene, and 1-decene, atactic polypropylene, and ethylene-ethyl acrylate copolymers. Commercially available polyolefins include VESTOPLAST 408, VESTOPLAST 508, VESTOPLAST 703, VESTOPLAST 704, and VESTOPLAST 708 (trade names) manufactured by Degussa, and Licocene PP 1302, Licocene PP 1502, Licocene PP 1602, and Licocene PP 2602 (trade names) manufactured by Clariant Japan.

The vinyl aromatic elastomers are not especially limited, but examples thereof include styrene-ethylene-based block copolymers, styrene-butadiene-based block copolymers, styrene-propylene-based block copolymers, styrene-isoprene-based block copolymers, styrene-butadiene-isoprene-based block copolymers, hydrogenated styrene-butadiene-based block copolymers, hydrogenated styrene-isoprene-based block copolymers and hydrogenated styrene-butadiene-isoprene-based block copolymers, which are polymers other than polymers constituting the crumb of a block copolymer according to the present embodiment.

Commercially available products of styrene-isoprene-based block copolymers include Quintac 3421, Quintac 3620, Quintac 3433N, Quintac 3520, Quintac 3450, Quintac 3270, Quintac 3280, and Quintac 3390 (trade names) manufactured by Zeon Corp., D1107P, D1111, D1112P, D1113P, D1114PX, D1117P, D1119P, D1124P, D1128PX, D1193P, and D4433P (trade names) manufactured by Kraton Polymers, and Vector 4111A, Vector 4111N, Vector 4113A, Vector 4113N, Vector 4114A, Vector 4114N, Vector 4186A, Vector 4187A, Vector 4211A, Vector 4211N, Vector 4213A, Vector 4213N, Vector 4215A, Vector 4230, Vector 4293A, and Vector 4411A (trade names) manufactured by TSRC Corp; and commercially available products of styrene-butadiene-based block copolymers include D1101, D1102, D1116, D1118, D1122, D1133, D1144, D1184, D4141, D4150, and D4158 (trade names) manufactured by Kraton Polymers, Vector 2336, Vector 2411, Vector 2411P, Vector 2518, Vector 2518A, Vector 2518LD, Vector 2518P, Vector 2518PC, Vector, Vector 6241A, Vector 7400, Vector 8508, Vector 8508A, Taipol 3201, Taipol 3206, Taipol 4202, Taipol 4230, and Taipol 4270 (trade names) manufactured by TSRC Corp., and Tufprene A, Tufprene 125, Tufprene 126S, Tufprene 315P, Asaprene T411, Asaprene T412, Asaprene T413, Asaprene T420, Asaprene T432, Asaprene T436, Asaprene T437, Asaprene T438, and Asaprene T439 (trade names) manufactured by Asahi Kasei Chemicals Corp. Commercially available products of hydrogenated styrene-isoprene-based block copolymers include G1701, G1702, G1750X, G1765X, and G1780X (trade names) manufactured by Kraton Polymers, and Septon 1001, Septon 1020, Septon 2002, Septon 2004, Septon 2005, Septon 2006, Septon 2007, Septon 2063, and Septon 2104 (trade names) manufactured by Kuraray Co., Ltd. Commercially available products of hydrogenated styrene-butadiene-based block copolymers include G1643, G1645, G1650, G1651, G1652, G1654, G1657, and G1726 (trade names) manufactured by Kraton Polymers, Septon 8004, Septon 8006, Septon 8007, Septon 8076, and Septon 8104 (trade names) manufactured by Kuraray Co., Ltd., Taipol 6150, Taipol 6151, Taipol 6152, Taipol 6154, and Taipol 6159 (trade names) manufactured by TSRC Corp., and H1221, H1062, H1052, H1041, H1051, H1057, H1043, and N504 (trade names) manufactured by Asahi Kasei Chemicals Corp. Commercially available products of hydrogenated styrene-butadiene-isoprene-based block copolymers include Septon 4033, Septon 4044, Septon 4055, Septon 4077, and Septon 4099 (trade names) manufactured by Kuraray Co., Ltd.

Further, the content of the vinyl aromatic elastomers as other polymers in the pressure-sensitive adhesive composition with respect to 100 parts by mass of the total of the crumb of a block copolymer according to the present embodiment and the other polymers is preferably from 0 to 95 parts by mass, more preferably from 5 to 95 parts by mass, still more preferably from 10 to 90 parts by mass, and further still more preferably from 15 to 85 parts by mass.

The other rubbers are not especially limited, but examples thereof include natural rubber; and synthetic rubbers such as isoprene-isobutylene rubber, polyisoprene rubber, polybutadiene rubber, styrene-butadiene rubber, styrene-isoprene rubber, propylene-butylene rubber, ethylene-propylene rubber, chloroprene rubber, acrylic rubber and polypentenamer rubber. Among these, from the viewpoints of the crosslinkability and the economic efficiency, natural rubber is preferable.

By using natural rubber, it is likely that the crosslinkability of the pressure-sensitive adhesive composition is further improved and the pressure-sensitive adhesive composition becomes excellent also in the economic efficiency.

The content of the natural rubber with respect to 100mass% of the pressure-sensitive adhesive composition is preferably from 0 to 90mass%, more preferably from 3 to 90mass%, still more preferably from 10 to 80mass%, and further still more preferably from 15 to 75mass%. When the content of the natural rubber is in the above range, the crosslinkability, the heat resistance, the solvent resistance and the economic efficiency of the pressure-sensitive adhesive composition are likely to be further improved.

Hereinafter, other polymers preferred according to use applications and required performance will be described more specifically.

(Hydrogenated vinyl aromatic elastomer)

From the viewpoints of the reduction of adhesive residue after peeling off the pressure-sensitive adhesive composition from an adherend on which the pressure-sensitive adhesive composition was pasted, the suppression of the adhesive strength change over time, the creeping property (the lower value the better), the heat resistance, the weather resistance, and the like, a hydrogenated vinyl aromatic elastomer can be used. The hydrogenated vinyl aromatic elastomer is not especially limited, but examples thereof include hydrogenated styrene-butadiene-based block copolymers having a structure of S-EB-S (S: polystyrene block, EB: ethylene/butylene copolymer block) or the like; hydrogenated styrene-isoprene-based block copolymers having a structure of S-EP-S (S: polystyrene block, EP: ethylene/propylene copolymer block) or the like; and hydrogenated styrene-butadiene-isoprene-based block copolymers having a structure of S-EEP-S (S: polystyrene block, EEP: ethylene/ethylene/propylene copolymer block) or the like. Among these, preferable are hydrogenated styrene-butadiene-based block copolymers and hydrogenated styrene-isoprene-based block copolymers.

The styrene content of the hydrogenated vinyl aromatic elastomer with respect to 100mass% of the hydrogenated vinyl aromatic elastomer, is preferably from 10mass% to 45mass%, more preferably from 13mass% to 40mass%, and still more preferably from 15mass% to 35mass%.

Further, the content of the polystyrene block of the hydrogenated vinyl aromatic elastomer with respect to 100mass% of the hydrogenated vinyl aromatic elastomer, is preferably 30mass% or lower, more preferably 21mass% or lower, and still more preferably 15mass% or lower. When the content of the polystyrene block is in the above range, the flexibility and the compatibility are likely to be further improved.

It is preferred that the content of B (the butylene monomer unit) in the ethylene/butylene copolymer block in the hydrogenated vinyl aromatic elastomer is high, and the content with respect to 100mol% of monomer units constituting the hydrogenated vinyl aromatic elastomer, is preferably 35mol% or higher, more preferably 45mol% or higher, still more preferably 55mol% or higher, and especially preferably 60mol% or higher. When the content of B in the ethylene/butylene copolymer block is in the above range, the flexibility and the compatibility are likely to be further improved.

The degree of hydrogenation of unsaturated groups in the conjugated diene compound monomer unit in the hydrogenated vinyl aromatic elastomer is preferably higher than 80mol%.

(Non-hydrogenated vinyl aromatic elastomer)

From the viewpoint of high flexibility, high adhesion, suppression of gelation, high economic efficiency or the like as the pressure-sensitive adhesive composition, the pressure-sensitive adhesive composition may comprise a non-hydrogenated vinyl aromatic elastomer. The non-hydrogenated vinyl aromatic elastomer is not especially limited, but examples thereof include styrene-ethylene-based block copolymers; styrene-butadiene-based block copolymers having a structure S-B-S, $(S-B)_nX$ (S: polystyrene block, B: polybutadiene block, X: a residue of a coupling agent) or the like; styrene-propylene-based block copolymers; styrene-isoprene-based block copolymers having a structure of S-I-S, $(S-I)_nX$ (S: polystyrene block, I: polyisoprene block, X: a residue of a coupling agent) or the like; and styrene-butadiene-isoprene-based block copolymers having a structure of $(S-(I/B))_nX$, S-(I/B)-S (S: polystyrene block, I/B: isoprene/butadiene copolymer block (isoprene and butadiene may be alternately arranged in any proportion, and the proportion may not be constant), X: a residue of a coupling agent) or the like. Among these, $(S-I)_nX$, $(S-B)_nX$ and $(S-(I/B))_nX$ are preferable, and those having a radial structure are more preferable. These may be used singly or in combinations of two or more.

The styrene content of the non-hydrogenated vinyl aromatic elastomer with respect to 100mass% of the non-hydrogenated vinyl aromatic elastomer, is preferably 45mass% or lower.

Further, the content of diblocks (for example, S-B, S-I, S-B-X, S-I-X) of the non-hydrogenated vinyl aromatic elastomer with respect to 100mass% of the non-hydrogenated vinyl aromatic elastomer, is preferably from 10 to 80mass%.

(Isoprene-based block copolymer)

From the viewpoints of the economic efficiency and the tack as the pressure-sensitive adhesive composition, the pressure-sensitive adhesive composition may comprise an isoprene-based block copolymer having a non-hydrogenated isoprene monomer unit. The isoprene-based block copolymer is not especially limited, but preferable are, for example, styrene-isoprene-based block copolymers having a structure of $(S-I)_n$, $(S-I)_n-S$, $(S-I)_nX$ (S: polystyrene block, I: polyisoprene block, n: an integer of 1 or more, preferably an integer of 1 to 6, X: a residue of a coupling agent) or the like. These may be used singly or in combinations of two or more.

The styrene content of the isoprene-based block copolymer with respect to 100mass% of the isoprene-based block copolymer, preferably 30mass% or lower, more preferably 25mass% or lower, still more preferably 20mass% or lower, and further still more preferably 18mass% or lower.

(Conjugated diene-based rubber)

From the viewpoints of the processability, the low melt viscosity at 180°C or lower, and good tack, adhesive power, adhesion and die cutting property, the pressure-sensitive adhesive composition can comprise a conjugated diene-based rubber. The conjugated diene-based rubber is not especially limited, but examples thereof include isoprene-isobutylene rubber, polyisoprene rubber, polybutadiene rubber, styrene-butadiene rubber, styrene-isoprene rubber and propylene-butylene rubber.

Further, from the viewpoint of improving the self-back face adhesive power and the skin patching strength of pressure-sensitive adhesive tapes, a polybutadiene rubber or a polyisoprene rubber may be used. Among these, a polyisoprene rubber is more preferable. The addition amount of the polybutadiene rubber and the polyisoprene rubber with respect to 100mass% of the pressure-sensitive adhesive composition may be 0mass%, but is preferably from 3 to 25mass%, more preferably from 5 to 20mass%, and still more preferably from 5 to 15mass%. When the addition amount of the polybutadiene rubber and the polyisoprene rubber is 3mass% or larger, the self-back face adhesive power and the skin patching strength are likely to be further improved. Further, when the addition amount of the polybutadiene rubber and the polyisoprene rubber is 25mass% or smaller, it is likely that the cohesive force is further improved and the adhesive residue is more reduced.

From the viewpoints of the processability, the low melt viscosity at 180°C or lower, good tack, adhesive power and adhesion, a conjugated diene-based diblock copolymer may be used as the conjugated diene-based rubber contained in the pressure-sensitive adhesive composition. The conjugated diene-based diblock copolymer is not especially limited, but examples thereof include polymers having a structure of S-I, (S-I)X, S-B, (S-B)X or the like, and hydrogenated materials thereof. These may be used singly or in combinations of two or more, and may be liquid or solid at normal temperature.

The content of the conjugated diene-based rubber with respect to 100mass% of the pressure-sensitive adhesive composition may be 0mass%, and is preferably from 3 to 90mass%, more preferably from 10 to 80mass%, and still more preferably from 15 to 75mass%. When the content of the conjugated diene-based rubber is in the above range, the oil bleeding resistance, low melt viscosity, tack, adhesive power, adhesion and flexibility of the pressure-sensitive adhesive composition are likely to be further improved.

(Ionomer)

In the case where high low-temperature coatability, creeping property, high strength or high elongation, and the like are required for the pressure-sensitive adhesive composition, a polymer may be used in the state of being an ionomer. The ionomer is not especially limited, but preferable are, for example, homopolymers or copolymers containing carboxylates, sulfonates or phosphonates neutralized or partially neutralized with metal ions. The content of the ionomer with respect to the total amount of the pressure-sensitive adhesive composition is preferably 5mass% or lower.

(Polyolefin based resin)

From the viewpoint of high temperature storage stability, high elongation, the reduction of the amount (55mass% or smaller, further, 45mass% or smaller, in the composition) of the tackifying resin in the pressure-sensitive adhesive composition, or the like, a polyolefin based resin can be used. The polyolefin based resin is not especially limited, but there are preferably used, for example, a copolymer of an $\alpha$-olefin with other olefin, or a propylene homopolymer. The melting point (condition: DSC measurement, 5°C/min) of these polymers is preferably 110°C or lower, more preferably 100°C or lower, and still more preferably from 60°C to 90°C. These polymers may be resins or elastomers.

Further from the viewpoint of the creeping performance (the lower value thes better), an olefin elastomer having blocks is more preferable. The molecular weight distribution of these polymers is preferably 1 to 4, and more preferably 1 to 3. Further from the viewpoint of the processability, combination use of two or more of the polymers is more preferable. Specifically, it is preferable to use an olefin based elastomer having a weight-average molecular weight of from 30,000 to lower than 60,000 and an olefin based elastomer having a weight-average molecular weight of 60,000 to 90,000 in combination, and it is more preferable to use an olefin based elastomer having a weight-average molecular weight of from 35,000 to 55,000 and an olefin based elastomer having a weight-average molecular weight of from 60,000 to 80,000.

(Liquid component)

In the case where a polyolefin based resin is contained in the pressure-sensitive adhesive composition, a liquid component (oil or the like) is preferably contained as well. The content of the liquid component with respect to 100mass% of the pressure-sensitive adhesive composition is preferably 20mass% or higher, and more preferably 25mass% or higher. Further, in the case where the elongation is required, combination use of an olefin based elastomer is preferable; and combination use of the olefin based elastomer having a Tg of -10°C or lower is more preferable.

(Wax)

As required, the pressure-sensitive adhesive composition may contain a wax. The addition amount of the wax with respect to 100mass% of the pressure-sensitive adhesive composition is preferably 20mass% or lower, more preferably 2 to 10mass%, and still more preferably 5 to 10mass%. When the addition amount of the wax is in the above range, the melt viscosity, particularly the melt viscosity at 140°C or lower, is likely to be more lowered.

The wax is not especially limited, but examples thereof include paraffin wax, microcrystalline wax and Fischer-Tropsh wax. By using such wax, the melt viscosity, particularly the melt viscosity at 140°C or lower, is likely to be more lowered.

The melting point of the wax is preferably 50°C or higher, more preferably 65°C or higher, still more preferably 70°C or higher, and further still more preferably 75°C or higher. Further, the melting point of the wax is preferably 110°C or lower. When the melting point of the wax is in the above range, the melt viscosity, particularly the melt viscosity at 140°C or lower, is likely to be more lowered.

Here, the softening point of the tackifier to be concurrently used with the wax is preferably 70°C or higher, and more preferably 80°C or higher. The storage elastic modulus (G') (measurement conditions: 25°C, 10 rad/s) of the pressure-sensitive adhesive composition obtained in this case is preferably 1 Mpa or lower, and the crystallization temperature is preferably 7°C or lower.

Usable commercial available products of waxes include trade name "115", trade name "120", trade name "125", trade name "130", trade name "135", trade name "140", trade name "150", trade name "155", trade name "HNP-3", trade name "HNP-5", trade name "HNP-9", trade name "HNP-10", trade name "HNP-11", trade name "HNP-12", trade name "HNP-51", trade name "SP-0145", trade name "SP-0160", trade name "SP-0165", trade name "SP-1035", trade name "SP-1040", trade name "SP-3035", trade name "SP-3040", trade name "EMW-0001", trade name "EMW-0003", trade name "Hi-Mic-1045", trade name "Hi-Mic-1070", trade name "Hi-Mic-1080", trade name "Hi-Mic-1090", trade name "Hi-Mic-2045", trade name "Hi-Mic-2065", and trade name "Hi-Mic-2095" manufactured by Nippon Seiro Co., Ltd., "Ultrathene 7A55A" manufactured by Tosoh Corp., and trade name "A-C 540", trade name "A-C 540A", trade name "A-C 580", trade name "A-C 5120", trade name "A-C 400", trade name "A-C 400A", trade name "A-C 405(S)", trade name "A-C 405(M)", trade name "A-C 405(T)", trade name "A-C 645P", trade name "A-C 573A", and trade name "A-C 573P" manufactured by Honeywell.

(Polar group-containing polymer)

The pressure-sensitive adhesive composition may contain, as required, a polar group-containing polymer having an atom(s) selected from the group consisting of nitrogen, oxygen, silicon, phosphorus, sulfur, tin and the like. The polar group-containing polymer is not especially limited, but examples thereof include modified polymers in which these polar group-containing functional groups are bound to block copolymers, modified block copolymers obtained by modifying block copolymer components with a modifier such as maleic anhydride, and oils modified on side chains or terminals with an amine, epoxy, carboxylic acid, carboxylic anhydride or the like. By using the polar group-containing polymer, the pressure-sensitive adhesive property to adherends having a high SP value, such as resins including superabsorbent polymers (SAP), acrylic resins, vinyl chloride resins and nylon resins, crosslinked materials thereof, glasses, and metals is likely to be further improved.

Commercially available products of the polar group-containing polymer include HG252 (trade name) manufactured by Kuraray Co., Ltd., M1943, M1911, M1913, MP10, and Tufprene 912 (trade names) manufactured by Asahi Kasei Chemicals Corp., and Taipol 7131 (trade name) manufactured by TSRC Corp.

(Stabilizer)

The pressure-sensitive adhesive composition may contain, as required, a stabilizer. The "stabilizer" is a material to be blended to improve the stability of the hot melt adhesives by preventing the reduction of the molecular weight, the gelation and the coloration, the generation of odors and the like due to heat, and is not especially limited. As the stabilizer, antioxidants, light stabilizers and the like can be exemplified. The antioxidants and the light stabilizers are usually used in disposable products, and are preferably capable of providing desired disposable products described later, and are not especially limited.

(Antioxidant)

The pressure-sensitive adhesive composition may contain an antioxidant. The "antioxidant" is used in order to prevent the oxidative deterioration of the hot melt adhesives. The antioxidant is not especially limited, but examples thereof include phenol-based antioxidants such as 2,6-di-t-butyl-4-methylphenol, n-octadecyl-3-(4'-hydroxy-3',5'-di-t-butylphenyl) propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate and 2-[1-(2-hydroxy-3,5-di-tert-pentylphenyl)] acrylate; sulfur-based antioxidants such as dilauryl thiodipropionate, lauryl stearyl thiodipropionate pentaerythritol-tetrakis($\beta$-lauryl thiopropionate); and phosphorus-based antioxidants such as tris(nonylphenyl) phosphite and tris(2,4-di-t-butylphenyl) phosphite. These may be used singly or in combinations of two or more.

Specific examples of commercially available products of the antioxidant include Sumiriser GM (trade name), Sumiriser TPD (trade name) and Sumiriser TPS (trade name), manufactured by Sumitomo Chemical Co., Ltd., Irganox 1076 (trade name), Irganox 1010 (trade name), Irganox HP2225FF (trade name), Irgafos 168 (trade name) and Irganox 1520 (trade name), manufactured by Ciba Specialty Chemicals Corp., and JF77 (trade name), manufactured by Johoku Chemical Co., Ltd.

The content of the antioxidant with respect to 100 parts by mass of the pressure-sensitive adhesive composition is preferably 10 parts by mass or lower, and more preferably 5 parts by mass or lower.

(Light stabilizer)

The pressure-sensitive adhesive composition may contain, as required, an antioxidant. The "light stabilizer" is used in order to improve the light resistance of hot melt adhesives. The light stabilizer is not especially limited, but examples thereof include benzotriazole-based ultraviolet absorbents such as 2-(2'-hydroxy-5'-methylphenyl)benzotriazole, 2-(2'-hydroxy-3',5'-t-butylphenyl)benzotriazole and 2-(2'-hydroxy-3',5'-di-t-butylphenyl)-5-chlorobenzotriazole; benzophenone-based ultraviolet absorbents such as 2-hydroxy-4-methoxybenzophenone; benzoate-based ultraviolet absorbents; triazine-based ultraviolet absorbents; hindered amine-based light stabilizers; lactone-based stabilizers: HALS; and inorganic ultraviolet absorbents such as microparticulate cerium oxide. These may be used singly or in combinations of two or more. In terms of higher light resistance, benzotriazole-based ultraviolet absorbents and hindered amine-based light stabilizers are preferable, and the combination use of a benzotriazole-based ultraviolet absorbent and a hindered amine-based light stabilizer is more preferable.

Specific examples of commercially available products of the light stabilizer include Tinuvin P (trade name), Tinuvin 770DF (trade name) and Cimassorb 2020FDL (trade name), manufactured by BASF, and ADK STAB LA-52 (trade name), ADK STAB LA-57 (trade name) and ADK STAB LA-77Y (trade name), manufactured by Adeka Corp.

The content of the light stabilizer with respect to 100 parts by mass of the pressure-sensitive adhesive composition is preferably 10 parts by mass or lower, and more preferably 5 parts by mass or lower.

In terms of high light resistance, the light stabilizer content in the pressure-sensitive adhesive composition according to the present embodiment is preferably 0.03mass% or higher, more preferably 0.05mass% or higher, and still more preferably 0.07mass% or higher. Further, in terms of suppressing the bleeding of the light stabilizer and economic efficiency, the light stabilizer content in the pressure-sensitive adhesive composition according to the present embodiment is preferably 1mass% or lower, more preferably 0.5mass% or lower, and still more preferably 0.3mass% or lower.

In terms of higher light resistance, it is preferable to use the above light stabilizer and, further, the above antioxidant in combination, and it is more preferable to use the above light stabilizer and a phosphorous antioxidant.

From the viewpoint of high light resistance, the antioxidant content in the pressure-sensitive adhesive composition according to the present embodiment is preferably 0.02mass% or higher, more preferably 0.04mass% or higher, and still more preferably 0.06mass% or higher. Further, in terms of suppressing the bleeding of the antioxidant and economic efficiency, the light resistant content in the pressure-sensitive adhesive composition according to the present embodiment is preferably 1.5mass% or lower and more preferably 1.0mass% or lower.

(Antistatic agent)

In order to prevent static electricity, it is preferable to add an antistatic agent to the pressure-sensitive adhesive composition according to the present embodiment. The antistatic agent is not especially limited, but examples thereof include surfactants, electroconductive resins, and electroconductive fillers.

(Lubricant)

A lubricant may be used in the pressure-sensitive adhesive composition according to the present embodiment in order to enhance the slipperiness of the product surface during the molding or after the molding of a plastic. The lubricant is not especially limited, but examples thereof include stearic acid amide and calcium stearate.

(Microparticulate fillers)

The pressure-sensitive adhesive composition may contain a microparticulate filler. The microparticulate filler is not especially limited, but examples thereof include mica, calcium carbonate, kaolin, talc, titanium oxide, diatomaceous earth, urea-based resins, styrene beads, calcinated clay, starch, zinc oxide, active zinc oxide, light magnesium carbonate, silica gel hydroxide, diatomaceous earth, and barium sulfate. Their shapes are preferably spherical and their sizes (the diameter in the case of spherical shape) are not especially limited.

[Properties of the pressure-sensitive adhesive composition]

The performance of the pressure-sensitive adhesive composition according to the present embodiment can be measured by using pressure-sensitive adhesive tapes fabricated under the conditions indicated in Examples described later and under the measurement conditions indicated in Examples.

G' (measurement condition: 25°C, 10 rad/sec) of the pressure-sensitive adhesive composition is preferably 20,000 or lower, and more preferably 15,000 or lower. When G' of the pressure-sensitive adhesive composition is in the above range, the adhesive residue of the pressure-sensitive adhesive composition is likely to be more reduced.

Further, the content of a liquid diluent with respect to 100mass% of the pressure-sensitive adhesive composition is preferably 60mass% or lower. When the content of the liquid diluent is in the above range, the pressure-sensitive adhesive composition is useful particularly for the application of adhesives to skins including transdermal drug delivery applications.

The pressure-sensitive adhesive composition according to the present embodiment can be utilized also in paper processing, bookbinding, disposable products and the like. Among these, it is suitable for disposable products, since it is excellent in adhesion in the wet state. The disposable products can be prepared by solution coating or hot melt coating the pressure-sensitive adhesive composition on at least one kind of members selected from the group consisting of woven fabrics, nonwoven fabrics, rubbers, resins, papers, polyolefin films, polyester films, PVC films, ionomer films, PVDC films, PVA films, PC films, PS films, PAN films, PEN films, cellophane films, nylon films, polyimide films, EMAA films and EVOH films. Here, among polyolefin films, polyethylene films and polypropylene films are preferable for the reasons of the durability, the cost and the like. Here, among papers, craft papers are preferable for the reasons of the durability, the cost and the like, and polyethylene-laminated craft papers are preferable from the viewpoints of the durability and the water resistance.

The melt viscosity at 150°C of the pressure-sensitive adhesive composition according to the present embodiment is preferably 5,000 mPa·s or lower, more preferably from 400 to 3,500 mPa·s, and still more preferably from 800 to 3,000 mPa·s. The melt viscosity is a viscosity of the hot melt pressure-sensitive adhesive in a molten state, and is measured by a Brookfield RVT-type viscometer (spindle: No. 27). When the melt viscosity is in the above range, the hot melt pressure-sensitive adhesive is especially suitable as the hot melt pressure-sensitive adhesive for disposable products for sanitary materials or the like, since the hot melt pressure-sensitive adhesive becomes suitable for low-temperature coating, and thereby it also becomes easy to be uniformly coated even on nonwoven fabrics and to penetrate therein.

The disposable products for sanitary materials are not especially limited, but examples thereof include paper diapers, sanitary napkins, pet sheets, hospital gowns and white scrub suits.

[Production method of the pressure-sensitive adhesive composition]

The pressure-sensitive adhesive composition according to the present embodiment can be produced by mixing the above-mentioned the crumb of a block copolymer with the tackifier and the softener and other components as required by a well-known method. The mixing method is not especially limited, but examples thereof include a method of homogeneously mixing the crumb of a block copolymer, the tackifier and the softener under heating by a mixer, a kneader, a uniaxial extruder, a biaxial extruder, a banbury mixer or the like.

The temperature in mixing is preferably from 130°C to 220°C, more preferably from 140°C to 210°C, and still more preferably from 150°C to 200°C. When the temperature in mixing is 130°C or higher, it is likely that the crumb of the block copolymer can be sufficiently melted and the dispersion becomes good. Further, when the temperature in the mixing is 220°C or lower, it is likely that the evaporation of low-molecular weight components of the crosslinking agent and the tackifier, and the deterioration of the pressure-sensitive adhesive property can be prevented.

[Coating method of the pressure-sensitive adhesive composition]

A coating method of the pressure-sensitive adhesive composition is not especially limited as long as being capable of providing desired products, and examples thereof include a method of solution coating in which the pressure-sensitive adhesive composition is dissolved in a solvent and coated, and a method of hot melt coating or the like in which the pressure-sensitive adhesive composition is melted and coated.

Among these, a hot melt coating method is preferred from the viewpoints of the environmental pollution and the ease of coating. The hot melt coating method is roughly divided into contact application and non-contact application. The "contact application" refers to an application method in which an ejector is brought into contact with a member or a film when a hot melt adhesive is applied. Further, the "non-contact application" refers to an application method in which when a hot melt adhesive is applied, an ejector is not brought into contact with a member or a film. The contact application method is not especially limited, but examples thereof include slot coater coating, roll coater coating, die coating, porous coating in which coating is carried out porously, and pattern coating. Further, the non-contact application method is not especially limited, but examples thereof include spiral coating in which an adhesive can be applied spirally by using air in intermittent coating or continuous coating, omega coating and control seam coating in which an adhesive can be applied wavelike, slot spray coating or curtain spray coating in which coating can be carried out planarly, dot coating in which coating can be carried out dottedly, bead coating in which coating can be carried out linearly, foaming melt coating in which a hot melt is foamed, coating on a threadlike material, and spray coating in which coating is carried out mistily.

In conventional hot melt adhesives having poor thermal stability, phase-separation easily occurs in high-temperature tanks. The phase separation even makes a cause of clogging of tank filters and transport pipe. In contrast, the pressure-sensitive adhesive composition according to the present embodiment is good in the thermal stability, and is homogeneously melted in a high-temperature tank of from 100 to 220°C and suppress the phase separation.

It is preferable that the pressure-sensitive adhesive composition according to the present embodiment is used in the form of laminate at least with a substrate. The kind of the substrate is not limited and, for example, films made of thermoplastic resins as well as non-thermoplastic substrates of paper, metal, woven fabric, non-woven fabric, and the like are usable. A release agent may be added to the components of the substrate. Release agents include long-chain alkyl-based release agents and silicon-based release agents.

In the case where higher weather resistance (a reduced change of adhesive power after UV irradiation) is required, it is more preferable to use a substrate having a low ultraviolet transmittance, and the substrate having a transmittance of 1% or lower is more preferred.

The pressure-sensitive adhesive composition according to the present embodiment can be suitably used for various types of pressure-sensitive adhesive tapes and labels, pressure-sensitive thin plates, pressure-sensitive sheets, surface protection sheets and films, backside adhesives for fixing various types of light-weight plastic molds, backside adhesives for fixing carpets, backside adhesives for fixing tiles, adhesives, sealants, masking agents for use during repainting work, sanitary materials, and the like. In particular, pressure-sensitive adhesive tapes and sanitary materials are preferable.

In the case where the pressure-sensitive adhesive composition according to the present embodiment is used as a masking agent for use during repainting work, it is preferable to use a metal foil such as an aluminum foil as a substrate from the viewpoint of suppressing corrosion caused by a chemical fluid.

In the case where the pressure-sensitive adhesive composition according to the present embodiment is used for sanitary materials, an elastic laminate may be formed in which non-woven fabric is used as a substrate, and a pressure-sensitive adhesive composition layer and an elastomer layer are laminated on the non-woven fabric in this order. For a superior fit, it is preferable that the residual ratio of the strength at 100% elongation of the elastic laminate is 80% or higher, and the residual ratio of the strength at 50% elongation of the elastic laminate is 70% or higher.

In production lines of disposable products for sanitary materials, the pressure-sensitive adhesive composition according to the present embodiment is generally applied on various types of members of the disposable products (for example, tissue, cotton, nonwoven fabric, polyolefin film and the like). In the application, the pressure-sensitive adhesive composition may be sprayed from various types of sprays.

The pressure-sensitive adhesive composition according to the present embodiment is suitable for spiral coating. It is remarkably useful for production of disposable products that the pressure-sensitive adhesive composition can be coated broadly by spray coating. When the pressure-sensitive adhesive composition can be coated broadly, the coating width can be set to narrow by adjusting the pressure of hot air.

If a pressure-sensitive adhesive composition is difficult to coat broadly, a number of spray nozzles are needed in order to obtain a sufficient adhesive area, so such a pressure-sensitive adhesive composition is unsuitable even for the production of disposable products having a comparatively small size, such as urine-taking liners, and disposable products having complex shapes.

Therefore, the pressure-sensitive adhesive composition according to the present embodiment is, since being allowed to be coated broadly in spiral coating, suitable for the disposable products.

The pressure-sensitive adhesive composition according to the present embodiment is, since being good in coating suitability at 150°C or lower, useful for production of the disposable products for sanitary materials. When the pressure-sensitive adhesive composition is coated at a high temperature, polyolefin (preferably polyethylene) films of base materials of disposable products are melted or thermally shrunk, and the appearance of the disposable products is largely damaged. When the pressure-sensitive adhesive composition is coated at 150°C or lower, the appearance of polyolefin (preferably polyethylene) films and nonwoven fabrics of base materials of disposable products does almost not change, and the appearance of the products are not damaged.

The pressure-sensitive adhesive composition according to the present embodiment is, since being excellent in high-speed coating suitability, suitable for production of disposable products for sanitary materials in a short time. In the case where a the pressure-sensitive adhesive composition is coated on a base material being conveyed at a high speed, in the contact-type coating method, breakage of the base material occurs due to friction in some cases. The pressure-sensitive adhesive composition according to the present embodiment is, since being suitable for spiral coating, which is one type of non-contact coating, suitable for high-speed coating, and improves the production efficiency of the disposable products. Further, the pressure-sensitive adhesive composition according to the present embodiment is suitable for high-speed coating, and when it is used for high-speed coating, disturbance in coated pattern does not occur.

[Applications]

The pressure-sensitive adhesive composition according to the present embodiment has good solubility, coatability, discharge stability and surface, is excellent in tackiness and adhesive power, and is good in the balance among these pressure-sensitive adhesive properties. By making the best use of these features, the pressure-sensitive adhesive composition can be utilized for various types of pressure-sensitive adhesive tapes and labels, pressure-sensitive thin plates, pressure-sensitive sheets, surface protection sheets and films, backside adhesives for fixing various types of light-weight plastic molds, backside adhesives for fixing carpets, backside adhesive for fixing tiles, adhesives and the like, and can suitably be used particularly for pressure-sensitive adhesive tapes, pressure-sensitive adhesive sheets and films, pressure-sensitive adhesive labels, surface protection sheets and films, and sanitary pressure-sensitive adhesives.

Examples

Hereinafter, the present embodiment will be described in detail by way of specific Examples and Comparative Examples, but the present embodiment is not limited to the following Examples. Here, in the following Examples and Comparative Examples, measurements of characteristics and physical properties of polymers were carried out by the following methods.

[(1): Properties of the block copolymer crumb]

<(1-1) Weight-average molecular weight>

The weight-average molecular weight of the block copolymer crumb was determined by using a calibration curve determined by the measurement of a commercially available standard polystyrene (peak molecular weights of the standard polystyrenes were used), based on the molecular weights of peaks in chromatogram. In the case of where the block copolymer was a block copolymer composition composed of block copolymers having two different structures of the component (A) and the component (B), the weight-average molecular weight was determined in the same manner, assuming that the peak indicating the lowest weight-average molecular weight corresponded to the component (A) and the peak indicating the second lowest weight-average molecular weight after the component (A) corresponded to the component (B). Here, it is assumed that the value obtained by dividing the peak area of each of the component (A) and the component (B) by the total peak area ((the peak area of component (A) or component (B))/(the total peak area)) is 0.1 or greater. The software used for the measurement was HLC-8320EcoSEC Collection; and the software used for the analysis was HLC-8320 Analysis. Peak areas were measured by a method described later.

(Measurement conditions)

GPC: HLC-8320GPC (manufactured by Tosoh Corp.)
Detector: RI
Detection sensitivity: 3 mV/min
Sampling pitch: 600 msec
Column: TSKgel superHZM-N (6 mm-I.D × 15 cm), 4 columns (manufactured by Tosoh Corp.)
Solvent: THF
Flow rate: 0.6 mm/min
Concentration: 0.5 mg/mL
Column temperature: 40°C
Injection volume: 20 μL

<(1-2) Contents of the component (A) and the component (B)>

In the case of where the block copolymer was a block copolymer composition composed of block copolymers having two different structures of the component (A) and the component (B), the proportion of the peak area of the component (A) to the total peak area of the elution curve measured in (1-1) above was regarded as the content of the component (A). Further, the proportion of a peak area of the component (B) to the total peak area of the elution curve measured in the above (1-1) was determined as a content of the component (B). Here, the area ratio was determined by separating peaks vertically at inflection point between the peaks by using the analysis software, HLC-8320 Analysis.

<(1-3) Content of the vinyl aromatic hydrocarbon monomer unit (styrene)>

A predetermined amount of the block copolymer was dissolved in chloroform; and by using an ultraviolet spectrometer (UV-2450, manufactured by Shimadzu Corp.), the peak intensity at an absorption wavelength (262 nm) attributable to the vinyl aromatic compound component (styrene) in the solution, was measured. From the acquired peak intensity, the content of the vinyl aromatic hydrocarbon monomer unit (styrene) was calculated by using the calibration curve.

<(1-4) Vinyl bond content of the conjugated diene compound monomer units, and the degree of hydrogenation of the conjugated diene compound monomer units>

By adding a large amount of methanol to the reaction solution after the polymerization reaction (the reaction solution before the hydrogenation reaction in the case of performing hydrogenation), the block copolymer was precipitated and recovered. Then, the obtained block copolymer was extracted with acetone, and vacuum dried. The component thus obtained was used as a sample for $^1$H-NMR measurement, and the vinyl bond content was measured.

By adding a large amount of methanol to the reaction solution after the polymerization reaction (the reaction solution before the hydrogenation reaction in the case of performing hydrogenation), a hydrogenated block copolymer was precipitated and recovered. Then, the hydrogenated block copolymer was extracted with acetone, and vacuum dried. The component thus obtained was used as a sample for $^1$H-NMR measurement, and the degree of hydrogenation was measured.

The conditions of the $^1$H-NMR measurement were as follows.

(Measurement conditions)

Measuring instrument: JNM-LA400 (manufactured by JEOL Ltd.)
Solvent: deuterated chloroform
Measurement sample: products removed from the polymer before and after the hydrogenation
Sample concentration: 50 mg/mL
Observation frequency: 400 MHz
Chemical shift reference: TMS (tetramethylsilane)
Pulse delay: 2.904 sec
Number of times of scanning: 64 times
Pulse width: 45°
Measurement temperature: 26°C

<(1-5) Specific surface area>

A block copolymer crumb was dried at 80°C under a vacuum gauge pressure of 0.095 MPa for 12 hours, and then the specific surface area was determined by a nitrogen absorption method (a BET multipoint method).
Measurement conditions are as shown below.
Pretreatment method: vacuum deaeration at 25°C for 8 hours
Measurement method: measurement of nitrogen adsorption-desorption isotherms using a constant volume method
Adsorption temperature: 77 K
Saturated vapor pressure: as measured
Adsorbate cross-sectional area: 0.162 nm$^2$
Adsorbate: nitrogen
Measurement apparatus: BELSORP-mini (manufactured by BEL Japan Inc.)
Pretreatment apparatus: BELPREP-vac II (manufactured by BEL Japan Inc.)
Here, the lower measurement limit of the above-mentioned measurement method of the specific surface area is about 0.04 m$^2$/g, and therefore in the case where the measurement result cannot be obtained because it exceeds the measurement limit, it can be judged that the specific surface area is 0.000001 m$^2$/g or larger.

<(1-6) Measurement by mercury intrusion method>

A block copolymer crumb was dried at 80°C under a vacuum gauge pressure of 0.095 MPa for 12 hours, and then a mercury intrusion method was performed to determine the cumulative pore volume; the average pore radius; the value obtained by dividing the maximum value of a log differential pore intrusion volume at a pore radius of 1 μm or larger and 100 μm or smaller by the maximum value of a log differential pore intrusion volume at a pore radius of 0.001 μm or larger and smaller than 1 μm ((the maximum value of a log differential pore intrusion volume at a pore radius of 1 μm to 100 μm)/(the maximum value of a log differential pore intrusion volume at a pore radius of 0.001 μm or larger and smaller than 1 μm)); the cumulative pore volume of pores having a pore radius of 1 μm to 100 μm; and the value obtained by dividing the cumulative pore volume of pores having a pore radius of 1 μm to 100 μm by the cumulative pore volume of pores having a pore radius of 0.001 μm or larger and 100 μm ((the cumulative pore volume of pores having a pore radius of 1 μm to 100 μm)/(the cumulative pore volume of pores having a pore radius of 0.001 μm to 100 μm)).
Measurement conditions are shown below.

Pretreatment method: vacuum drying at room temperature for a whole day and night
Measurement method: pore distribution measurement by mercury intrusion method
The pore radius was calculated using the Washburn's equation

$$\text{Washburn's equation: } PD = -4 \; \sigma\cos\theta$$

P: Pressure
D: Pore diameter
σ: Surface tension of mercury
θ: Contact angle between mercury and sample

Surface tension of mercury: 480 dynes/cm
Contact angle between mercury and sample: 140 degrees
Number of measurement points:

a pore radius of 0.001 $\mu$m or larger and smaller than 0.01 $\mu$m; 25 points
a pore radius of 0.01 $\mu$m or larger and smaller than 0.1 $\mu$m; 12 points
a pore radius of 0.1 $\mu$m or larger and smaller than 1 $\mu$m; 11 points
a pore radius of 1 $\mu$m or larger and smaller than 10 $\mu$m; 10 points
a pore radius of 10 $\mu$m or larger and smaller than 100 $\mu$m; 9 points

Measurement apparatus: Autopore IV 9520 (manufactured by Micromeritics)
Measurement software: Auto Pore IV 9500 V.109

<(1-7) Moisture content in crumb>

A block copolymer crumb was heated in a halogen moisture analyzer at 150°C for 8 min to determine the decrease in mass, and the moisture content was calculated according to the following formula.

$$\text{Moisture content (mass\%)} = [\text{Decrease in mass through heating}$$

$$\text{(amount of moisture contained in crumb)/Mass of block copolymer crumb}$$

$$\text{before heating}] \times 100$$

<(1-8) Transportability of crumb>

A 200 mL measuring cylinder was used to accommodate 100 mL of the crumb of a block copolymer, and transportability was judged by the weight of the crumb. The crumb was allowed to freely fall from a height of 27 cm from the bottom of the measuring cylinder. Measurements were performed three times and their average value was used for the evaluation. A crumb with 23 g/100 mL or higher was judged as having good transportability (○), and a crumb with a lower value was judged as having poor transportability (×).

[(2) Measurement of physical properties of pressure-sensitive adhesive composition]

(Preparation of pressure-sensitive adhesive compositions (Blend α, Blend β))

100 parts by mass of a block copolymer crumb, 140 parts by mass of Quintone R100 (manufactured by Zeon Corp.) as a tackifier, and 30 parts by mass of Diana Process Oil NS-90S (manufactured by Idemitsu Kosan Co., Ltd.) as a softener were blended, and melt-kneaded at 180°C for 60 min by a mixer (model: L5M-A, Silverson Nippon Ltd., four paddle-type blades) while being heated using an oil bath, to thereby obtain a hot melt-type pressure-sensitive adhesive composition (Blend α).
100 parts by mass of a block copolymer crumb, 300 parts by mass of Arkon M100 (manufactured by Arakawa Chemical Industries, Ltd.) as a tackifier, and 100 parts by mass of PW-90 (manufactured by Idemitsu Kosan Co., Ltd.) as a softener were blended, and melt-kneaded at 180°C for 60 min by a mixer (model: L5M-A, Silverson Nippon Ltd.,

four paddle-type blades) while being heated using an oil bath, to thereby obtain a hot melt-type pressure-sensitive adhesive composition (Blend β).

Here, with respect to 100 parts by mass of the crumb of a block copolymer, 1 part by mass of 2-t-butyl-6-(3-t-butyl-2-hydroxy-5-methylbenzyl)-4-methylphenyl acrylate as a stabilizer was added to the pressure-sensitive adhesive compositions (Blends α and β).

<(2-1) Melt viscosity (180°C) of pressure-sensitive adhesive composition (Blend α)>

Measurement was performed with a Brookfield viscometer (DV-III, manufactured by Brookfield Engineering Laboratories, Inc.) at 180°C. The melt viscosity was evaluated based on the acquired value according to the following criteria. The evaluation was rated as ◎, ○, × in the order from the best to the worst.
Melt viscosity (180°C) (Pa·s) ≤ 50: ◎
50 < Melt viscosity (180°C) (Pa·s) ≤ 150: ○
150 < Melt viscosity (180°C) (Pa·s): ×

<(2-2) Melt viscosity (140°C) of pressure-sensitive adhesive composition (Blend β)>

Measurement was performed with a Brookfield viscometer (DV-III, manufactured by Brookfield Engineering Laboratories, Inc.) at 140°C. The melt viscosity was evaluated based on the acquired value according to the following criteria. The evaluation was rated as ◎, ○, Δ, × in the order from the best to the worst.
Melt viscosity (140°C) (mPa·s) ≤ 1500: ◎
1500 < Melt viscosity (140°C) (mPa·s) ≤ 3000: ○
3000 < Melt viscosity (140°C) (mPa·s) ≤ 6000: Δ
6000 < Melt viscosity (140°C) (mPa·s): ×

<(2-3) Low-odor property evaluation of pressure-sensitive adhesive compositions (Blends α, Blend β)>

The low-odor properties of the pressure-sensitive adhesive compositions were evaluated by a sensory test. A predetermined amount of a pressure-sensitive adhesive composition was placed in a PE bag having a size of 14 cm × 8 cm and sealed, and after 10 min, the inside of the bag was smelled, and a composition from whose bag an odor was sensed was judged as having an odor. The low-odor property was evaluated based on the obtained results according to the following criteria. The evaluation was rated as ◎, ○, Δ, × in the order from the best to the worst.
Odor was sensed even with 20 g or more of a pressure-sensitive adhesive composition: ◎
Odor was sensed with 10 g or more and less than 20 g of a pressure-sensitive adhesive composition: ○
Odor was sensed with 5 g or more and less than 10 g of a pressure-sensitive adhesive composition: Δ
Odor was sensed with less than 5 g of a pressure-sensitive adhesive composition: ×

<(2-4) Solubility evaluation of viscous adhesive composition>

The solubility of a viscous adhesive composition was evaluated by checking whether an undissolved polymer residue remained in the viscous adhesive composition after melt kneading. A viscous adhesive composition in which no undissolved residue was found after 10 minutes of additional melt kneading was evaluated as a "trace amount", a viscous adhesive composition in which an undissolved residue was found after 10 minutes of additional melt kneading but in which no undissolved residue was found after 20 minutes of additional melt kneading time was evaluated as a "small amount", and a viscous adhesive composition in which an undissolved residue was found even after 20 minutes of additional melt kneading and which required a longer melt kneading time was evaluated as a "large amount". In the case where an undissolved residue was present during melt kneading, an undissolved residue was also confirmed during the formation of a pressure-sensitive adhesive tape.

(Preparation of pressure-sensitive adhesive tape)

A dissolved pressure-sensitive adhesive composition was cooled to room temperature and dissolved in toluene. The obtained toluene solution was coated on a PET film by an applicator, and thereafter held at room temperature for 30 min and in an oven of 70°C for 7 min to completely evaporate toluene to thereby fabricate a pressure-sensitive adhesive tape with a tacky layer thickness of 40 μm.

<(2-5) Loop tack of pressure-sensitive adhesive composition (Blend β)>

Measurement was carried out using a loop-form pressure-sensitive adhesive tape having a length of 250 mm × a width of 15 mm and a stainless steel plate as an adherend with conditions of: contact area of 15 mm × 50 mm, adhering time of 3 sec, adhering and peeling speed of 500 mm/min. The evaluation was rated as ◎ ○, Δ, × in the order from the best to the worst.
Loop tack (N/15 mm) ≥ 20: ◎
20> Loop tack (N/15 mm) ≥ 15: ○
15> Loop tack (N/15 mm) ≥ 10: Δ
10> Loop tack (N/15 mm): ×

<(2-6) Probe tack of pressure-sensitive adhesive composition (Blend α)>

The probe tack of a pressure-sensitive adhesive composition was measured in accordance with ASTM D2979. A pressure-sensitive adhesive tape was attached to a weight (a load of 10 g) at 23°C, and then a probe (5 mmφ) was brought into contact with the pressure-sensitive adhesive tape at a speed of 1 mm/sec. After 1 sec, the probe was peeled off at a speed of 1 mm/sec, and the maximum value at this time was measured to evaluate tack. The evaluation was rated as ◎ ○, Δ, × in the order from the best to the worst.
Probe tack (N/5 mmφ) ≥ 2.0: ◎
2.0> Probe tack (N/5 mmφ) ≥ 1.2: ○
1.2> Probe tack (N/5 mmφ) ≥ 0.6: Δ
0.6> Probe tack (N/5 mmφ): ×

<(2-7) Adhesive powers of pressure-sensitive adhesive compositions (Blend α, blend β)>

A pressure-sensitive adhesive tape of 25 mm in width was pasted on a SUS plate, and peeled off at a peeling speed of 300 mm/min; and the 180° peeling force at this time was measured. Based on the acquired peeling force, the adhesive power of the pressure-sensitive adhesive composition was evaluated according to the following criteria. The evaluation was rated as ◎, ○, Δ, × in the order from the best to the worst.
13 ≤ Adhesive power (N/10 mm): ◎
7 ≤ Adhesive power (N/10 mm) < 13: ○
4 ≤ Adhesive power (N/10 mm) < 7: Δ
Adhesive power (N/10 mm) < 4: ×

<(2-8) Holding power (50°C) of pressure-sensitive adhesive composition (Blend α)>

A pressure-sensitive adhesive tape was pasted on an SUS plate such that the area of contact was 15 mm × 15 mm, a load of 1 kg was applied at 50°C, and the time elapsed until the pressure-sensitive adhesive tape slipped down was measured. Based on the acquired time, the holding power of the pressure-sensitive adhesive composition was evaluated according to the following criteria. The evaluation was rated as ◎ ○, Δ, × in the order from the best to the worst.
300 ≤ Holding power (50°C) (min): ◎
130 ≤ Holding power (50°C) (min) < 300: ○
70 ≤ Holding power (50°C) (min) < 130: Δ
Holding power (50°C) (min) < 70: ×

<(2-9) Holding power (40°C) of pressure-sensitive adhesive composition (Blend β)>

A pressure-sensitive adhesive tape was pasted on an SUS plate such that the area of contact was 25 mm × 25 mm, a load of 1 kg was applied at 40°C, and the time elapsed until the pressure-sensitive adhesive tape slipped down was measured. Based on the acquired time, the holding power of the pressure-sensitive adhesive composition was evaluated according to the following criteria. The evaluation was rated as ◎ ○, Δ, × in the order from the best to the worst.
1000 ≤ Holding power (40°C) (min): ◎
500 ≤ Holding power (40°C) (min) < 1000: ○
250 ≤ Holding power (40°C) (min) < 500: Δ
Holding power (40°C) (min) < 250: ×

[(3) Preparation of a hydrogenation catalyst]

In Examples and Comparative Examples described later, a hydrogenation catalyst to be used when a hydrogenated block copolymer or a mixture thereof was fabricated was prepared by the following method. The atmosphere of a reaction vessel equipped with a stirring device was replaced by nitrogen, and 1 L of dried and refined cyclohexane was charged therein. Then, 100 mmol of bis(η5-cyclopentadienyl)titanium chloride was added. A n-hexane solution containing 200 mmol of trimethylaluminum was further added under sufficient stirring, and allowed to react at room temperature for about 3 days. Thereby, a hydrogenation catalyst was obtained.

[(4) Preparation of block copolymers]

<Block copolymer solution 1>

A 40 L-internal volume stainless steel autoclave with a stirrer and a jacket was cleaned and dried, and the atmosphere thereof was replaced with nitrogen; 5,960 g of cyclohexane was charged; and warm water was passed through the jacket, and the content was set at 70°C. Then, 2.5 g of N,N,N',N'-tetrametylethylenediamine (hereinafter, referred to also as "TMEDA") and a n-butyllithium cyclohexane solution (3.79 g in terms of pure content) were added, and a styrene-containing cyclohexane solution (430 g in terms of pure content) was continuously added. The polymerization conversion rate of the styrene was 100%. Successively, a 1,3-butadiene-containing cyclohexane solution (2600 g in terms of pure content) was continuously added to continue polymerization. The polymerization conversion rate of the butadiene was 100%. Thereafter, 4.84 g of a coupling agent was added to perform a coupling reaction. The coupling agent used was a mixture of Epotohto ZX-1059 (Nippon Steel & Sumikin Chemical Co., Ltd.) and cyclohexane in a mass ratio of 90:10. After the coupling agent addition, 0.70 g of methanol was added for deactivation. Some of the obtained solution was sampled and analyzed, and it was found that in the obtained block copolymer composition, the styrene content was 14mass%, and the average vinyl bond content of the butadiene portion was 38mass%. Further, in the obtained block copolymer, the content of the component (A) was 48mass%, the weight-average molecular weight was 115,000, the content of the component (B) was 52mass%, and the weight-average molecular weight was 228,000.

<Block copolymer solution 2>

The hydrogenation catalyst prepared as described above was added to the block copolymer solution 1, in an amount of 100 weight ppm in terms of Ti of the hydrogenation catalyst with respect to 100 parts by mass of the block copolymer; and a hydrogenation reaction was carried out to obtain a block copolymer solution 2. Some of the obtained block copolymer solution 2 was sampled and analyzed, and it was found that the total degree of hydrogenation of unsaturated double bonds based on the conjugated diene compound in the obtained hydrogenated block copolymer composition was 52 mol%.

<Block copolymer solution 8>

A block copolymer solution 8 was obtained in the same manner as the block copolymer solution 1, except for altering the amounts of TMEDA, n-butyllithium, styrene, 1,3-butadiene, the coupling agent and methanol to those indicated in Table 1, respectively. Some of the obtained solution was sampled and analyzed, and results are shown in Table 1.

<Block copolymer solution 9>

A block copolymer solution 9 was obtained in the same manner as the block copolymer solution 2, except for using the block copolymer solution 8 in place of the block copolymer solution 1. Some of the obtained solution was sampled and analyzed, and results are shown in Table 1.

<Block copolymer solutions 3 to 7>

Block copolymer solutions were obtained in the same manner as the block copolymer solution 1, except for altering the amounts of TMEDA, n-butyllithium, styrene, 1,3-butadiene, the coupling agent and methanol to those indicated in Table 1, respectively. Some of the obtained solutions was sampled and analyzed, and results are shown in Table 1. Block copolymer solutions 3 to 7 were obtained in the same manner as the block copolymer solution 2, except for using the block copolymer solutions obtained here. Some of the obtained solutions was sampled and analyzed, and results are shown in Table 1.

<Block copolymer solution 10>

Using a temperature-controllable autoclave equipped with a stirrer and a jacket as a reactor, a cyclohexane solution of 45 parts by mass of impurity-removed styrene and 0.03 parts by mass of TMEDA was prepared in a nitrogen gas atmosphere, the inner temperature of the reactor was maintained at 60°C, and then 0.19 parts by mass of n-butyllithium as a polymerization initiator was supplied to the reactor for polymerization. Next, 55 parts by mass of butadiene was supplied for polymerization, and then 0.14 parts by mass of a coupling agent was added for a coupling reaction. The coupling agent used was a mixture of Epotohto ZX-1059 (Nippon Steel & Sumikin Chemical Co., Ltd.) and cyclohexane in a mass ratio of 90:10. After adding the coupling agent, 0.055 parts by mass of methanol was added for deactivation. Some of the obtained solution was sampled and analyzed, and it was found that in the obtained block copolymer composition, the styrene content was 45mass%, and the average vinyl bond content of the butadiene portion was 10mass%. Further, in the obtained block copolymer, the content of the component (A) was 70mass%, the weight-average molecular weight was 55,000, the content of the component (B) was 30mass%, and the weight-average molecular weight was 110,000.

<Block copolymer solution 11>

Using a temperature-controllable autoclave equipped with a stirrer and a jacket as a reactor, a cyclohexane solution of 23 parts by mass of impurity-removed styrene and 0.09 parts by mass of TMEDA was prepared in a nitrogen gas atmosphere, the inner temperature of the reactor was maintained at 60°C, and then 0.18 parts by mass of n-butyllithium as a polymerization initiator was supplied to the reactor for polymerization. Next, 77 parts by mass of butadiene was supplied for polymerization, and then 0.08 parts by mass of a coupling agent was added for a coupling reaction. Tetraethoxysilane was used as the coupling agent. After adding the coupling agent, 0.055 parts by mass of methanol was added for deactivation. Some of the obtained solution was sampled and analyzed, and it was found that in the obtained block copolymer composition, the styrene content was 23mass%, and the average vinyl bond content of the butadiene portion was 31mass%. In the obtained block copolymer, the content of the component (A) was 75mass%, the weight-average molecular weight was 70,000, the content of the component (B) was 25mass%, and the weight-average molecular weights of block copolymers having the structures $(Ar-D)_2X$, $(Ar-D)_3X$ and $(Ar-D)_4X$ contained as the component (B) were 140,000, 210,000 and 280,000, respectively. Using the obtained copolymer solution, the hydrogenation catalyst prepared as described above was added in 100 weight ppm in terms of Ti of the hydrogenation catalyst with respect to 100 parts by mass of the block copolymer, and a hydrogenation reaction was carried out to obtain a block copolymer solution 11. Some of the obtained block copolymer solution 11 was sampled and analyzed, and it was found that the total degree of hydrogenation of unsaturated double bonds based on the conjugated diene compound was 55mol% in the obtained hydrogenated block copolymer composition.

<Block copolymer solution 12>

Using a temperature-controllable autoclave equipped with a stirrer and a jacket as a reactor, a cyclohexane solution of 15 parts by mass of impurity-removed styrene and 0.03 parts by mass of TMEDA was prepared in a nitrogen gas atmosphere, the inner temperature of the reactor was maintained at 60°C, and then 0.062 parts by mass of n-butyllithium as a polymerization initiator was supplied to the reactor for polymerization. Next, 70 parts by mass of butadiene was supplied for polymerization. Next, 15 parts by mass of impurity-removed styrene was supplied for polymerization, 0.016 parts by mass of methanol was added for deactivation, and thus a block copolymer having a styrene-butadiene-styrene structure was obtained. Some of the obtained solution was sampled and analyzed, and it was found that in the obtained block copolymer composition, the styrene content was 30mass%, the average vinyl bond content of the butadiene portion was 50mass%, and the weight-average molecular weight was 300,000. Using the obtained copolymer solution, the hydrogenation catalyst prepared as described above was added in 100 weight ppm in terms of Ti of the hydrogenation catalyst with respect to 100 parts by mass of the block copolymer, and a hydrogenation reaction was carried out to obtain a block copolymer solution 12. Some of the obtained block copolymer solution 12 was sampled and analyzed, and it was found that the total degree of hydrogenation of unsaturated double bonds based on the conjugated diene compound was 100mol% in the obtained hydrogenated block copolymer composition.

<Production Example 1>

Octadecyl-3-(3,5-di-t-butyl-4-hydroxyphenyl) propionate was added in an amount of 0.3 parts by mass with respect to 100 parts by mass of the block copolymer to the block copolymer solution 2, and sufficiently mixed. This hydrogenated block copolymer solution was subjected to steam stripping at 95°C for 1 hour. A styrene-maleic anhydride copolymer Na salt as a crumbing agent was added to perform steam stripping.

An aqueous slurry containing a hydrogenated block copolymer composition crumb in the obtained aqueous slurry was transferred to a vibrating screen having a mesh opening of 1 mm to perform a dehydration treatment (<process 1>), and then the moisture content of the hydrogenated block copolymer crumb after undergoing <process 1> was measured by the above method. The moisture content at this time was 50mass%.

A dehydrating treatment and a drying treatment were performed on the hydrogenated block copolymer crumb respectively using separate apparatuses.

First, the crumb was supplied to a uniaxial screw extruder-type water extractor and extruded at a screw speed of about 90 rpm for a dehydration treatment (the first stage of <process 2>). The discharge port temperature of the uniaxial screw extruder-type water extractor was 109°C.

Next, the hydrogenated block copolymer crumb obtained above was supplied to a uniaxial screw expander dryer and extruded at a screw speed of about 80 rpm for a drying treatment (<the second stage of process 2>). The discharge port temperature of the uniaxial screw-type expander dryer and the moisture content of the obtained crumb were 149°C and 5.2mass%, respectively.

Thereafter, a drying treatment was performed on the hydrogenated block copolymer crumb obtained above by blowing hot air at about 90°C using an oscillating conveyor dryer (<process 3>).

The crumb eventually obtained was evaluated by the methods set forth in (1-5) and (1-6) above. The specific surface area was 0.061 m$^2$/g, the average pore radius was 0.013 $\mu$m, the value (Z) obtained by dividing the maximum value of a log differential pore intrusion volume at a pore radius of 1 $\mu$m or larger and 100 $\mu$m or smaller by the maximum value of a log differential pore intrusion volume at a pore radius of 0.001 $\mu$m or larger and smaller than 1 $\mu$m was 1.15, the cumulative pore volume was 0.36 mL/g, the cumulative pore volume of pores having a pore radius of 1 to 100 $\mu$m was 0.23 mL/g, and the value obtained by dividing the cumulative pore volume of pores having a pore radius of 1 to 100 $\mu$m by the cumulative pore volume of pores having a pore radius of 0.001 $\mu$m or larger and 100 $\mu$m ((the cumulative pore volume of pores having a pore radius of 1 $\mu$m to 100 $\mu$m)/(the cumulative pore volume of pores having a pore radius of 0.001 $\mu$m to 100 $\mu$m)) was 0.64. At this time, (the production rate at the dryer discharge port in <process 2>)/(the area of die plate openings) was 0.74 (kg/h)/mm$^2$.

<Production Examples 2 to 9>

Block copolymer crumbs were obtained by the same method as Production Example 1, except for altering the block copolymer solution used, the moisture content of the crumb at the discharge port of <process 1>, the discharge port temperature at the first stage of <process 2>, and the discharge port temperature and the moisture content of the crumb at the second stage of <process 2> as shown in Table 2. Results of measurement by the same method as Production Example 1 on the crumbs of the block copolymers are shown in Table 2.

<Production Example 10>

A crumb was formed under the same conditions as Production Example 1 using the block copolymer solution 9. The obtained hydrogenated block copolymer crumb was pelletized using a 40 mm monoaxial extruder and a uniaxial pelletizer. The extruder had a melt temperature of 210 to 220°C and a die temperature of 210°C. The results of measurement on the obtained pellets by the same method as Production Example 1 are shown in Table 2.

<Production Example 11>

Octadecyl-3-(3,5-di-t-butyl-4-hydroxyphenyl) propionate was added in an amount of 0.3 parts by mass with respect to 100 parts by mass of the block copolymer to the block copolymer solution 10, and sufficiently mixed. This block copolymer solution was subjected to steam stripping at 95°C for 1 hour. A styrene-maleic anhydride copolymer Na salt as a crumbing agent was added to perform steam stripping.

An aqueous slurry containing a block copolymer composition crumb in the obtained aqueous slurry was transferred to a vibrating screen having a mesh opening of 1 mm to perform a dehydration treatment (<process 1>), and then the moisture content of the block copolymer crumb after undergoing <process 1> was measured by the above method. The moisture content at this time was 65mass%.

This block copolymer crumb was supplied to a two-stage uniaxial screw extruder in which a dehydration treatment means (the first stage) and a drying treatment means (the second stage) were integrated, and extruded at a screw speed of 80 rpm, to perform a dehydration treatment and a drying treatment. (The first stage and the second stage of <process 2>). Although the first-stage dehydration treatment means of the two-stage uniaxial screw extruder used had slits, they were completely closed during the operation in order to retain the moisture in the crumb to the second-stage drying treatment means.

Table 2 shows the respective discharge port temperatures of the dehydration treatment means and the drying treatment means (the first-stage discharge port temperature, the second-stage discharge port temperature), the moisture content of the crumb obtained from the discharge port of the drying treatment means, and the results measured by the same method as Production Example 1.

<Production Example 12>

A block copolymer crumb was obtained by the same method as Production Example 11 except for using a block copolymer solution shown in Table 2 in place of the block copolymer solution 10. Results measured by the same method as Production Example 1 are shown in Table 2.

<Production Example 13>

A block copolymer crumb was obtained by the same method as Production Example 11 except for using a block copolymer solution shown in Table 2 in place of the block copolymer solution 10. Results measured by the same method as Production Example 1 are shown in Table 2.

<Production Example 14>

A block copolymer crumb was obtained by the same method as Production Example 11 except for using a block copolymer solution shown in Table 2 in place of the block copolymer solution 10. Results measured by the same method as Production Example 1 are shown in Table 2.

<Example 1>

A hot melt pressure-sensitive adhesive composition (Blend $\alpha$) was obtained by the above-mentioned preparation method of a pressure-sensitive adhesive composition using the block copolymer composition of Production Example 1. Further, a pressure-sensitive adhesive tape was obtained by the above-mentioned preparation method of a pressure-sensitive adhesive tape. Physical properties of the above-mentioned pressure-sensitive adhesive composition were measured and evaluated by using this pressure-sensitive adhesive composition and pressure-sensitive adhesive tape. These results are shown in Table 3.

<Examples 2 and 3, Comparative Examples 1 and 2>

Pressure-sensitive adhesive compositions and pressure-sensitive adhesive tapes were fabricated, and their physical properties were evaluated, by carrying out the same operation as in Example 1, except for using the block copolymer compositions of Production Examples 2, 3 and 4, 5 in place of the block copolymer composition of Production Example 1. These results are shown in Table 3.

<Example 4>

A hot melt pressure-sensitive adhesive composition (Blend $\beta$) was obtained by the above-mentioned preparation method of a pressure-sensitive adhesive composition using the block copolymer composition of Production Example 6. Further, a pressure-sensitive adhesive tape was obtained by the above-mentioned preparation method of a pressure-sensitive adhesive tape. Physical properties of the above-mentioned pressure-sensitive adhesive composition were measured and evaluated by using thus obtained pressure-sensitive adhesive composition and pressure-sensitive adhesive tape. These results are shown in Table 4.

<Examples 5 to 8, Comparative Examples 3 to 6>

Pressure-sensitive adhesive compositions and pressure-sensitive adhesive tapes were fabricated, and their physical properties were evaluated, by carrying out the same operation as in Example 4, except for using the block copolymer compositions of Production Examples 7, 8, 11, 12, 9, 10, and 13 and 14 in place of the block copolymer composition of Production Example 6. These results are shown in Table 4. Concerning Comparative Example 4 and Comparative Example 5, melt kneading was carried out for a total of 100 min. An undissolved residue disappeared in Comparative Example 4, while undissolved residue was confirmed in Comparative Example 5. As for Comparative Example 4, a pressure-sensitive adhesive composition and a pressure-sensitive adhesive tape were fabricated, and their physical properties were evaluated.

[Table 1]

[Table 1]

Table 1

| | | Block Copolymer Solution | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Cyclohexane (g) | | 5960 | | | | | | | | | - | - | - |
| TMEDA(g) | | 2.5 | - | 2.3 | 2.5 | 5.2 | 5.4 | 5.3 | 5.7 | - | - | - | - |
| n-Butyllithium (g) | | 3.79 | - | 3.60 | 3.79 | 6.88 | 7.04 | 7.04 | 7.47 | - | - | - | - |
| Styrene (g) | | 430 | - | 450 | 420 | 1070 | 1070 | 920 | 1040 | - | - | - | - |
| 1,3-Butadiene (g) | | 2600 | - | 2570 | 2600 | 2000 | 2000 | 2140 | 2020 | - | - | - | - |
| Coupling Agent (g) | | 4.84 | - | 3.99 | 4.87 | 4.92 | 5.23 | 5.21 | 7.55 | - | - | - | - |
| Methanol (g) | | 0.70 | - | 0.74 | 0.69 | 2.12 | 2.15 | 2.14 | 1.93 | - | - | - | - |
| Content of Vinyl Aromatic Monomer Unit (mass%) | | 14 | 15 | 14 | 35 | 35 | 30 | 34 | | | 45 | 23 | 30 |
| Vinyl Bond Content of Conjugated Diene Monomer Unit before Hydrogenation (mol%) | | 38 | 38 | 41 | 41 | 41 | 40 | 35 | | | 10 | 31 | 50 |
| Component (A) | Structure | Ar-D | Ar-D | Ar-D | Ar-D | Ar-D | Ar-D | Ar-D | Ar-D | Ar-D | Ar-D | Ar-D | - |
| | Content (mass%) | 48 | 55 | 48 | 71 | 70 | 70 | 59 | | | 70 | 75 | - |
| | Weight-Average Molecular Weight | 115000 | 118000 | 110000 | 55000 | 53000 | 53000 | 50000 | | | 55000 | 70000 | - |

40

(continued)

| | | Block Copolymer Solution | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| | Structure | (Ar-D)₂X | | (Ar-D)₂X | (Ar-D)₂X | (Ar-D)₂X | (Ar-D)₂X | (Ar-D)₂X | (Ar-D)₂X | | (Ar-D)₂X | (Ar-D)₂X | Ar-D-Ar |
| | Content (mass%) | 52 | | 45 | 52 | 29 | 30 | 30 | 41 | | 30 | 5 | 100 |
| | Weight-Average Molecular Weight | 228000 | | 236000 | 220000 | 112000 | 106000 | 106000 | 100000 | | 110000 | 140000 | 300000 |
| | Structure | - | | - | - | - | - | - | - | | - | (Ar-D)₃X | - |
| | Content (mass%) | - | | - | - | - | - | - | - | | - | 10 | - |
| | Weight-Average Molecular Weight | - | | - | - | - | - | - | - | | - | 210000 | - |
| Component (B) | Structure | - | | - | - | - | - | - | - | | - | (Ar-D)₄X | - |
| | Content (mass%) | - | | - | - | - | - | - | - | | - | 10 | - |
| | Weight-Average Molecular Weight | - | | - | - | - | - | - | - | | - | 280000 | - |
| | Total Degree of Hydrogenation (mol%) | 0 | 52 | 40 | 45 | 60 | 55 | 50 | 0 | 51 | 0 | 55 | 100 |

[Table 2]

Table 2

| | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| | | | | | | | | | | Production Example | | | | | |
| Block Copolymer Solution | | 2 | 3 | 4 | 2 | 1 | 5 | 6 | 7 | 8 | 9 | 10 | 11 | 12 | 11 |
| Process 1 | Moisture Content of Crumb at Discharge Port (mass%) | 50 | 63 | 65 | 68 | 53 | 50 | 62 | 66 | 48 | 50 | 65 | 50 | 65 | 68 |
| | First-Stage Discharge Port Temperature (°C) | 109 | 104 | 102 | 97 | 108 | 100 | 100 | 102 | 90 | 109 | 108 | 95 | 100 | 105 |
| | Second-Stage Discharge Port Temperature (°C) | 149 | 172 | 155 | 178 | 175 | 150 | 172 | 129 | 180 | 149 | 147 | 160 | 158 | 170 |
| Process 2 | Moisture Content of Crumb at Second-Stage Discharge Port (mass%) | 5.2 | 3.8 | 21.0 | 25.0 | 22.0 | 4.8 | 3.5 | 24.0 | 21.0 | 5.2 | 3.4 | 4.1 | 4.0 | 3.2 |
| | (Production Rate) /(Area of Die Plate Openings) (kg/h)/mm$^2$ | 0.74 | 0.74 | 0.74 | 0.74 | 0.74 | 2.44 | 2.44 | 2.44 | 2.44 | 2.44 | 2.38 | 1.58 | 0.55 | 0.56 |
| Process 3 | Moisture Content of Crumb at Discharge Port (mass%) | 0.89 | 0.75 | 0.92 | 0.74 | 0.88 | 0.88 | 0.75 | 0.97 | 0.86 | 0.89 | 0.21 | 0.52 | 0.90 | 0.31 |
| Specific Surface Area (m$^2$/g) | | 0.061 | 0.090 | 0.150 | 0.300 | 0.059 | 0.042 | 0.081 | 0.071 | 0.045 | - | 0.042 | 0.045 | 0.900 | 0.02 |
| Average Pore Radius (μm) | | 0.013 | 0.019 | 0.020 | 0.020 | 0.013 | 0.012 | 0.019 | 0.019 | 0.012 | 0.0053 | 0.012 | 0.010 | 0.040 | 0.01 |
| (Z) | | 1.15 | 1.40 | 2.10 | 2.50 | 1.15 | 0.91 | 1.80 | 2.38 | 0.85 | 0.21 | 0.91 | 0.87 | 3.00 | 0.45 |
| Cumulative Pore Volume (mL/g) | | 0.36 | 0.70 | 0.50 | 0.50 | 0.36 | 0.27 | 0.69 | 0.59 | 0.27 | 0.11 | 0.27 | 0.23 | 1.00 | 0.17 |

43

(continued)

| | Production Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Cumulative Pore Volume of Pores Having Pore Radius of from 1 to 100 μm (mL/g) | 0.23 | 0.49 | 0.38 | 0.40 | 0.04 | 0.16 | 0.48 | 0.47 | 0.04 | 0 | 0.16 | 0.16 | 0.80 | 0.045 |
| (Cumulative Pore Volume of Pores Having Pore Radius of from 1 μm to 100 μm)/(Cumulative Pore Volume of Pores Having Pore Radius of from 0.001 μm to 100 μm) | 0.64 | 0.70 | 0.75 | 0.80 | 0.11 | 0.59 | 0.70 | 0.80 | 0.15 | 0 | 0.59 | 0.68 | 0.80 | 0.26 |

In the table, Z represents [(Maximum Value of Log Differential Pore Intrusion Volume at Pore Radius of from 1 μm to 100 μm)/(Maximum Value of Log Differential Pore Intrusion Volume at Pore Radius of 0.001 μm or Larger and Smaller Than 1 μm)

[Table 3]

Table 3

| Pressure-sensitive adhesive Composition (Blend α) | Example 1 | Example 2 | Example 3 | Comparative Example 1 | Comparative Example 2 |
|---|---|---|---|---|---|
| Crumb of Block Copolymer | Production Example 1 | Production Example 2 | Production Example 3 | Production Example 4 | Production Example 5 |
| Transportability of Crumb | ○ | ○ | ○ | × | ○ |
| Evaluation of Pressure-Sensitive Adhesive Composition | | | | | |
| Holding Power | ○ | Δ | Δ | × | × |
| Probe Tack | ○ | Δ | ○ | ○ | × |
| Adhesive Power | ○ | ○ | Δ | Δ | × |
| Solubility | None | Trace Amount | Trace Amount | Small Amount | Large Amount |
| Melt Viscosity | ○ | ○ | ○ | ○ | ◎ |
| Odor | Δ | ○ | ○ | ○ | Δ |

[Table 4]

Table 4

| Pressure-Sensitive Adhesive Composition (Blend β) | Example 4 | Example 5 | Example 6 | Example 7 | Example 8 | CE 3 | CE 4 | CE 5 | CE 6 |
|---|---|---|---|---|---|---|---|---|---|
| Crumb of Block Copolymer | Production Example 6 | Production Example 7 | Production Example 8 | Production Example 11 | Production Example 12 | Production Example 9 | Production Example 10 | Production Example 13 | Production Example 14 |
| Transportability of Crumb | ○ | ○ | ○ | ○ | ○ | ○ | ○ | × | ○ |
| Evaluation of Pressure-Sensitive Adhesive Composition | | | | | | | | | |
| Holding Power (60-Min Kneading) | ○ | Δ | Δ | ○ | ○ | × | Δ | Δ | Δ |
| Loop Tack (60-Min Kneading) | ○ | Δ | ○ | Δ | ○ | × | × | × | × |
| Adhesive Power (60-Min Kneading) | ○ | ○ | Δ | Δ | ○ | × | × | × | × |
| Solubility (60-Min Kneading) | None | Trace Amount | Trace Amount | None | None | Small Amount | Large Amount | Large Amount | Small Amount |
| Holding Power (100-Min Kneading) | - | - | - | - | - | - | ○ | - | - |
| Loop Tack (100-Min Kneading) | - | - | - | - | - | - | ○ | - | - |
| Adhesive Power (100-Min Kneading) | - | - | - | - | - | - | ○ | - | - |
| Melt Viscosity | ○ | ○ | ○ | ○ | ○ | ◎ | ○ | × | ○ |
| Odor | ○ | ◎ | ◎ | ○ | ○ | ○ | × | ◎ | × |

The present application is based on a Japanese Patent Application (Japanese Patent Application No. 2014-104562), filed with Japan Patent Office on May 20, 2014, the entire contents of which are hereby incorporated by reference.

Industrial Applicability

The pressure-sensitive adhesive composition according to the present invention can be utilized for various types of pressure-sensitive adhesive tapes, pressure-sensitive adhesive sheets, pressure-sensitive adhesive films, pressure-sensitive adhesive labels, pressure-sensitive thin plates, pressure-sensitive sheets, surface protection sheets, surface protection films, sanitary materials, backside adhesives for fixing various types of light-weight plastic molds, backside adhesives for fixing carpets, backside adhesives for fixing tiles, adhesives and the like, and has the industrial applicability as a pressure-sensitive adhesive particularly for pressure-sensitive adhesive tapes, pressure-sensitive adhesive sheets, pressure-sensitive adhesive films, pressure-sensitive adhesive labels, surface protection sheets, surface protection films, and sanitary materials.

**Claims**

1. A crumb of a block copolymer, wherein
   the block copolymer comprises at least one polymer block comprising a vinyl aromatic hydrocarbon monomer unit as a primary component and at least one polymer block comprising a conjugated diene compound monomer unit as a primary component, and the block copolymer has a weight-average molecular weight of 20,000 to 1,000,000, and the crumb satisfies requirements (a) to (c) below:

   (a) a specific surface area is 0.000001 $m^2$/g or larger and smaller than 0.3 $m^2$/g;
   (b) a cumulative pore volume of pores having a pore radius of from 1 $\mu$m to 100 $\mu$m is 0.08 mL/g or larger and smaller than 1.0 mL/g; and
   (c) an average pore radius is 0.005 $\mu$m or larger and 0.05 $\mu$m or smaller.

2. The crumb of a block copolymer according to claim 1, wherein the specific surface area is 0.000001 $m^2$/g or larger and 0.2 $m^2$/g or smaller.

3. The crumb of a block copolymer according to claim 1 or 2, wherein the average pore radius is 0.025 $\mu$m or smaller.

4. The crumb of a block copolymer according to any one of claims 1 to 3, wherein a value obtained by dividing a maximum value of a log differential pore intrusion volume at a pore radius of 1 $\mu$m or larger and 100 $\mu$m or smaller by a maximum value of a log differential pore intrusion volume at a pore radius of 0.001 $\mu$m or larger and smaller than 1 $\mu$m ((a maximum value of a log differential pore intrusion volume at a pore radius of from 1 $\mu$m to 100 $\mu$m)/(a maximum value of a log differential pore intrusion volume at a pore radius of 0.001 $\mu$m or larger and smaller than 1 $\mu$m)) is 0.1 to 2.

5. The crumb of a block copolymer according to any one of claims 1 to 4, wherein the cumulative pore volume is 0.0001 mL/g or larger and smaller than 0.6 mL/g.

6. The crumb of a block copolymer according to any one of claims 1 to 5, wherein the cumulative pore volume is 0.0001 mL/g or larger and smaller than 0.4 mL/g.

7. The crumb of a block copolymer according to any one of claims 1 to 6, wherein a value obtained by dividing a cumulative pore volume of pores having a pore radius of 1 to 100 $\mu$m by a cumulative pore volume of pores having a pore radius of 0.001 $\mu$m or larger and 100 $\mu$m or smaller ((a cumulative pore volume of pores having a pore radius of 1 $\mu$m to 100 $\mu$m)/(a cumulative pore volume of pores having a pore radius of 0.001 $\mu$m to 100 $\mu$m)) is 0.30 or larger and 0.80 or smaller.

8. The crumb of a block copolymer according to any one of claims 1 to 7, wherein a value obtained by dividing a cumulative pore volume of pores having a pore radius of 1 to 100 $\mu$m by the cumulative pore volume of pores having a pore radius of 0.001 $\mu$m or larger and 100 $\mu$m or smaller((a cumulative pore volume of pores having a pore radius of 1 $\mu$m to 100 $\mu$m)/(a cumulative pore volume of pores having a pore radius of 0.001 $\mu$m to 100 $\mu$m)) is 0.40 or larger and 0.77 or smaller.

**EP 3 147 299 B1**

9. The crumb of a block copolymer according to any one of claims 1 to 8, wherein a content of the vinyl aromatic monomer unit in the block copolymer is 5mass% or higher and lower than 20mass%.

10. The crumb of a block copolymer according to any one of claims 1 to 9, wherein a content of the vinyl aromatic hydrocarbon unit in the block copolymer is 20mass% or higher and 50mass% or lower.

11. The crumb of a block copolymer according to any one of claims 1 to 10, wherein
the block copolymer is a block copolymer composition comprising a component (A) and a component (B);
the component (A) comprises at least one polymer block comprising a vinyl aromatic hydrocarbon as a primary component and at least one polymer block comprising a conjugated diene compound as a primary component, and has a weight-average molecular weight of 20,000 or higher and 500,000 or lower;
the component (B) comprises at least one polymer block comprising a vinyl aromatic hydrocarbon as a primary component and at least one polymer block comprising a conjugated diene compound as a primary component, and has a weight-average molecular weight of 30,000 or higher and 1,000,000 or lower; and
a ratio between the weight-average molecular weights of the component (A) and the component (B) ((the weight-average molecular weight of the component (B))/(the weight-average molecular weight of the component (A)) is from 1.3 to 10.

12. The crumb of a block copolymer according to claim 11, wherein
a content of the component (A) is 20weight% or more and 90weight% or less, and
a content of the component (B) is 10weight% or more and 80weight% or less.

13. The crumb of a block copolymer according to claim 11 or 12, wherein the weight-average molecular weight of the component (A) is lower than 200,000.

14. The crumb of a block copolymer according to claim 11 or 12, wherein the weight-average molecular weight of the component (A) is 70,000 or higher and 500,000 or lower.

15. The crumb of a block copolymer according to claim 11 or 12, wherein the weight-average molecular weight of the component (A) is 20,000 or higher and 120,000 or lower.

16. The crumb of a block copolymer according to any one of claims 11 to 15, wherein the weight-average molecular weight of the component (B) is 140,000 or higher and 1,000,000 or lower.

17. The crumb of a block copolymer according to any one of claims 11 to 16, wherein the weight-average molecular weight of the component (B) is 200,000 or higher and 1,000,000 or lower.

18. The crumb of a block copolymer according to claim 11 or 12, wherein the weight-average molecular weight of the component (B) is 30,000 or higher and 200,000 or lower.

19. The crumb of a block copolymer according to any one of claims 11 to 18, wherein the component (B) comprises two polymer blocks comprising a vinyl aromatic hydrocarbon monomer unit as a primary component and at least one polymer block comprising a conjugated diene compound monomer unit as a primary component.

20. The crumb of a block copolymer according to any one of claims 1 to19, wherein a degree of hydrogenation H (mol%) of unsaturated double bonds based on a conjugated diene compound is 5% or higher.

21. The crumb of a block copolymer according to any one of claims 1 to 20, wherein a degree of hydrogenation H (mol%) of unsaturated double bonds based on a conjugated diene compound is 90% or lower.

22. A pressure-sensitive adhesive composition, comprising:

100 parts by mass of a polymer comprising the crumb of a block copolymer according to any one of claims 1 to 21;
from 20 to 500 parts by mass of a tackifier; and
from 0 to 300 parts by mass of a softener.

**Patentansprüche**

1. Blockcopolymerkrümel, wobei
das Blockcopolymer mindestens einen Polymerblock umfasst, der eine vinylaromatische Kohlenwasserstoffmonomereinheit als Hauptkomponente umfasst, und mindestens einen Polymerblock, der eine konjugierte Dienverbindungsmonomereinheit als Hauptkomponente umfasst, wobei das Blockcopolymer ein Gewichtsmittel des Molekulargewichts von 20000 bis 1000000 aufweist, und
der/die Krümel die nachstehenden Anforderungen (a) bis (c) erfüllt/erfüllen:

   a) die spezifische Oberfläche ist 0,000001 m$^2$/g oder größer und kleiner als 0,3 m$^2$/g;
   (b) das kumulative Porenvolumen von Poren mit einem Porenradius von 1 $\mu$m bis 100 $\mu$m ist 0,08 ml/g oder größer und kleiner als 1,0 ml/g; und
   (c) der durchschnittliche Porenradius ist 0,005 $\mu$m oder größer und 0,05 $\mu$m oder kleiner.

2. Blockcopolymerkrümel nach Anspruch 1, wobei die spezifische Oberfläche 0,000001 m$^2$/g oder größer und 0,2 m$^2$/g oder kleiner ist.

3. Blockcopolymerkrümel nach Anspruch 1 oder 2, wobei der durchschnittliche Porenradius 0,025 $\mu$m oder kleiner ist.

4. Blockcopolymerkrümel nach einem der Ansprüche 1 bis 3, wobei ein Wert, der durch Division des Maximalwerts des Logarithmus des differentiellen Poreneindringvolumens bei einem Porenradius von 1 $\mu$m oder größer und 100 $\mu$m oder kleiner durch den Maximalwert des Logarithmus des differentiellen Poreneindringvolumens bei einem Porenradius von 0,001 $\mu$m oder größer und kleiner als 1 $\mu$m erhalten wird ((Maximalwert des Logarithmus des differentiellen Poreneindringvolumens bei einem Porenradius von 1 $\mu$m bis 100 $\mu$m)/(Maximalwert des Logarithmus des differentiellen Poreneindringvolumens bei einem Porenradius von 0,001 $\mu$m oder größer und kleiner als 1 $\mu$m)), 0,1 bis 2 ist.

5. Blockcopolymerkrümel nach einem der Ansprüche 1 bis 4, wobei das kumulative Porenvolumen 0,0001 ml/g oder größer und kleiner als 0,6 ml/g ist.

6. Blockcopolymerkrümel nach einem der Ansprüche 1 bis 5, wobei das kumulative Porenvolumen 0,0001 ml/g oder größer und kleiner als 0,4 ml/g ist.

7. Blockcopolymerkrümel nach einem der Ansprüche 1 bis 6, wobei ein Wert, der durch Division des kumulativen Porenvolumens von Poren mit einem Porenradius von 1 bis 100 $\mu$m durch das kumulative Porenvolumen von Poren mit einem Porenradius von 0,001 $\mu$m oder größer und 100 $\mu$m oder kleiner erhalten wird ((kumulatives Porenvolumen von Poren mit einem Porenradius von 1 $\mu$m bis 100 $\mu$m)/(kumulatives Porenvolumen von Poren mit einem Porenradius von 0,001 $\mu$m bis 100 $\mu$m)), 0,30 oder größer und 0,80 oder kleiner ist.

8. Blockcopolymerkrümel nach einem der Ansprüche 1 bis 7, wobei ein Wert, der durch Division des kumulativen Porenvolumens von Poren mit einem Porenradius von 1 bis 100 $\mu$m durch das kumulative Porenvolumen von Poren mit einem Porenradius von 0,001 $\mu$m oder größer und 100 $\mu$m oder kleiner erhalten wird ((kumulatives Porenvolumen von Poren mit einem Porenradius von 1 $\mu$m bis 100 $\mu$m)/(kumulatives Porenvolumen von Poren mit einem Porenradius von 0,001 $\mu$m bis 100 $\mu$m)), 0,40 oder größer und 0,77 oder kleiner beträgt.

9. Blockcopolymerkrümel nach einem der Ansprüche 1 bis 8, wobei der Gehalt der vinylaromatischen Monomereinheit in dem Blockcopolymer 5 Massen-% oder höher und niedriger als 20 Massen-% ist.

10. Blockcopolymerkrümel nach einem der Ansprüche 1 bis 9, wobei der Gehalt der vinylaromatischen Kohlenwasserstoffeinheit in dem Blockcopolymer 20 Massen-% oder höher und 50 Massen-% oder niedriger ist.

11. Blockcopolymerkrümel nach einem der Ansprüche 1 bis 10, wobei
das Blockcopolymer eine Blockcopolymerzusammensetzung ist, die eine Komponente (A) und eine Komponente (B) umfasst;
wobei die Komponente (A) mindestens einen Polymerblock umfasst, der einen vinylaromatischen Kohlenwasserstoff als Hauptkomponente umfasst, und mindestens einen Polymerblock, der eine konjugierte Dienverbindung als Hauptkomponente umfasst, wobei das Gewichtsmittel des Molekulargewichts 20000 oder höher und 500000 oder niedriger ist;

die Komponente (B) mindestens einen Polymerblock umfasst, der einen vinylaromatischen Kohlenwasserstoff als Hauptkomponente umfasst, und mindestens einen Polymerblock, der eine konjugierte Dienverbindung als Hauptkomponente umfasst, wobei das Gewichtsmittel des Molekulargewichts 30000 oder höher und 1000000 oder niedriger ist; und

das Verhältnis zwischen den Gewichtsmitteln der Molekulargewichte der Komponente (A) und der Komponente (B) ((Gewichtsmittel des Molekulargewichts der Komponente (B))/(Gewichtsmittel des Molekulargewichts der Komponente (A)) 1,3 bis 10 ist.

12. Blockcopolymerkrümel nach Anspruch 11, wobei
der Gehalt der Komponente (A) 20 Gew.-% oder mehr und 90 Gew.-% oder weniger beträgt, und
der Gehalt der Komponente (B) 10 Gew.-% oder mehr und 80 Gew.-% oder weniger beträgt.

13. Blockcopolymerkrümel nach Anspruch 11 oder 12, wobei das Gewichtsmittel des Molekulargewichts der Komponente (A) kleiner als 200000 ist.

14. Blockcopolymerkrümel nach Anspruch 11 oder 12, wobei das Gewichtsmittel des Molekulargewichts der Komponente (A) 70000 oder höher und 500000 oder niedriger ist.

15. Blockcopolymerkrümel nach Anspruch 11 oder 12, wobei Gewichtsmittel des Molekulargewichts der Komponente (A) 20000 oder höher und 120000 oder niedriger ist.

16. Blockcopolymerkrümel nach einem der Ansprüche 11 bis 15, wobei Gewichtsmittel des Molekulargewichts der Komponente (B) 140000 oder höher und 1000000 oder niedriger ist.

17. Blockcopolymerkrümel nach einem der Ansprüche 11 bis 16, wobei Gewichtsmittel des Molekulargewichts der Komponente (B) 200000 oder höher und 1000000 oder niedriger ist.

18. Blockcopolymerkrümel nach Anspruch 11 oder 12, wobei das Gewichtsmittel des Molekulargewichts der Komponente (B) 30000 oder höher und 200000 oder niedriger ist.

19. Blockcopolymerkrümel nach einem der Ansprüche 11 bis 18, wobei die Komponente (B) zwei Polymerblöcke umfasst, die eine vinylaromatische Kohlenwasserstoffmonomereinheit als Hauptkomponente aufweisen, und mindestens einen Polymerblock, der eine konjugierte Dienverbindungsmonomereinheit als Hauptkomponente umfasst.

20. Blockcopolymerkrümel nach einem der Ansprüche 1 bis 19, wobei der Hydrierungsgrad H (Mol-%) ungesättigter Doppelbindungen, bezogen auf konjugierte Dienverbindung, 5% oder höher ist.

21. Blockcopolymerkrümel nach einem der Ansprüche 1 bis 19, wobei der Hydrierungsgrad H (Mol-%) ungesättigter Doppelbindungen, bezogen auf konjugierte Dienverbindung, 90% oder niedriger ist.

22. Haftklebstoffzusammensetzung, umfassend:

100 Massenteile eines Polymers, umfassend den/die Blockcopolymerkrümel nach einem der Ansprüche 1 bis 21; von 20 bis 500 Massenteile eines Klebrigmachers; und von 0 bis 300 Masseteile eines Weichmachers.

## Revendications

1. Granule de copolymère séquencé, dans lequel
le copolymère séquencé comprend au moins une séquence de polymère comprenant un motif monomère hydrocarboné vinyle aromatique en tant que composant principal et au moins une séquence de polymère comprenant un motif monomère de composé diène conjugué en tant que composant principal, et le copolymère séquencé a une masse moléculaire moyenne en poids de 20 000 à 1 000 000, et

le granule satisfait aux exigences (a) à (c) ci-dessous :

(a) une surface spécifique est de 0,000001 $m^2/g$ ou supérieure et inférieure à 0,3 $m^2/g$ ;
(b) un volume de pores cumulé des pores ayant un rayon de pore de 1 $\mu m$ à 100 $\mu m$ est de 0,08 ml/g ou supérieur et inférieur à 1,0 ml/g ; et

(c) un rayon moyen de pore est de 0,005 μm ou supérieur et de 0,05 μm ou inférieur.

2. Granule de copolymère séquencé selon la revendication 1, dans lequel la surface spécifique est de 0,000001 m²/g ou supérieure et de 0,2 m²/g ou inférieure.

3. Granule de copolymère séquencé selon la revendication 1 ou 2, dans lequel le rayon moyen de pore est de 0,025 μm ou inférieur.

4. Granule de copolymère séquencé selon l'une quelconque des revendications 1 à 3, dans lequel une valeur obtenue en divisant une valeur maximale d'un volume d'intrusion de pore différentiel logarithmique à un rayon de pore de 1 μm ou supérieur et de 100 μm ou inférieur par une valeur maximale d'un volume d'intrusion de pore différentiel logarithmique à un rayon de pore de 0,001 μm ou supérieur et inférieur à 1 μm ((une valeur maximale d'un volume d'intrusion de pore différentiel logarithmique à un rayon de pore de 1 μm à 100 μm) / (une valeur maximale d'un volume d'intrusion de pore différentiel logarithmique à un rayon de pore de 0,001 μm ou supérieur et inférieur à 1 μm)) est de 0,1 à 2.

5. Granule de copolymère séquencé selon l'une quelconque des revendications 1 à 4, dans lequel le volume de pore cumulé est de 0,0001 ml/g ou supérieur et inférieur à 0,6 ml/g.

6. Granule de copolymère séquencé selon l'une quelconque des revendications 1 à 5, dans lequel le volume de pore cumulé est de 0,0001 ml/g ou supérieur et inférieur à 0,4 ml/g.

7. Granule de copolymère séquencé selon l'une quelconque des revendications 1 à 6, dans lequel une valeur obtenue en divisant un volume de pores cumulé des pores ayant un rayon de pore de 1 à 100 μm par un volume de pores cumulé des pores ayant un rayon de pore de 0,001 μm ou supérieur et de 100 μm ou inférieur ((un volume de pores cumulé des pores ayant un rayon de pore de 1 μm à 100 μm) / (un volume de pores cumulé des pores ayant un rayon de pore de 0,001 μm à 100 μm)) est de 0,30 ou supérieure et de 0,80 ou inférieure.

8. Granule de copolymère séquencé selon l'une quelconque des revendications 1 à 7, dans lequel une valeur obtenue en divisant un volume de pores cumulé des pores ayant un rayon de pore de 1 à 100 μm par le volume de pore cumulé des pores ayant un rayon de pore de 0,001 μm ou supérieur à 100 μm ou inférieur((un volume de pores cumulé des pores ayant un rayon de pore de 1 μm à 100 μm)/(un volume de pores cumulé des pores ayant un rayon de pore de 0,001 μm à 100 μm)) est de 0,40 ou supérieure et de 0,77 ou inférieure.

9. Granule de copolymère séquencé selon l'une quelconque des revendications 1 à 8, dans lequel une teneur du motif monomère vinyle aromatique dans le copolymère séquencé est de 5 % en masse ou supérieure et inférieure à 20 % en masse.

10. Granule de copolymère séquencé selon l'une quelconque des revendications 1 à 9, dans lequel une teneur du motif hydrocarboné vinyle aromatique dans le copolymère séquencé est de 20 % en masse ou supérieur et de 50 % en masse ou inférieur.

11. Granule de copolymère séquencé selon l'une quelconque des revendications 1 à 10, dans lequel

le copolymère séquencé est une composition de copolymère séquencé comprenant un composant (A) et un composant (B) ;

le composant (A) comprend au moins une séquence de polymère comprenant un hydrocarbure vinyle aromatique en tant que composant principal et au moins une séquence de polymère comprenant un composé diène conjugué en tant que composant principal, et a une masse moléculaire moyenne en poids de 20 000 ou supérieure et de 500 000 ou inférieure ;

le composant (B) comprend au moins une séquence de polymère comprenant un hydrocarbure vinyle aromatique en tant que composant principal et au moins une séquence de polymère comprenant un composé diène conjugué en tant que composant principal, et a une masse moléculaire moyenne en poids de 30 000 ou supérieure et de 1 000 000 ou inférieure ; et

un rapport entre les masses moléculaires moyennes en poids du composant (A) et du composant (B) ((la masse moléculaire moyenne en poids du composant (B))/(la masse moléculaire moyenne en poids du composant (A)) est de 1,3 à 10.

**12.** Granule de copolymère séquencé selon la revendication 11, dans lequel
une teneur du composant (A) est de 20 % en poids ou plus et de 90 % en poids ou moins, et
une teneur du composant (B) est de 10 % en poids ou plus et de 80 % en poids ou moins.

**13.** Granule de copolymère séquencé selon la revendication 11 ou 12, dans lequel la masse moléculaire moyenne en poids du composant (A) est inférieure à 200 000.

**14.** Granule de copolymère séquencé selon la revendication 11 ou 12, dans lequel la masse moléculaire moyenne en poids du composant (A) est de 70 000 ou supérieure et de 500 000 ou inférieure.

**15.** Granule de copolymère séquencé selon la revendication 11 ou 12, dans lequel la masse moléculaire moyenne en poids du composant (A) est de 20 000 ou supérieure et de 120 000 ou inférieure.

**16.** Granule de copolymère séquencé selon l'une quelconque des revendications 11 à 15, dans lequel la masse moléculaire moyenne en poids du composant (B) est de 140 000 ou supérieure et de 1 000 000 ou inférieure.

**17.** Granule de copolymère séquencé selon l'une quelconque des revendications 11 à 16, dans lequel la masse moléculaire moyenne en poids du composant (B) est de 200 000 ou supérieure et de 1 000 000 ou inférieure.

**18.** Granule de copolymère séquencé selon la revendication 11 ou 12, dans lequel la masse moléculaire moyenne en poids du composant (B) est de 30 000 ou supérieure et de 200 000 ou inférieure.

**19.** Granule de copolymère séquencé selon l'une quelconque des revendications 11 à 18, dans lequel le composant (B) comprend deux séquences de polymère comprenant un motif monomère hydrocarboné vinyle aromatique en tant que composant principal et au moins une séquence de polymère comprenant un motif monomère de composé diène conjugué en tant que composant principal.

**20.** Granule de copolymère séquencé selon l'une quelconque des revendications 1 à 19, dans lequel un degré d'hydrogénation H (% en mol) des doubles liaisons insaturées sur la base d'un composé diène conjugué est de 5 % ou supérieur.

**21.** Granule de copolymère séquencé selon l'une quelconque des revendications 1 à 20, dans lequel un degré d'hydrogénation H ((% en mol) des doubles liaisons insaturées sur la base d'un composé diène conjugué est de 90 % ou inférieur.

**22.** Composition adhésive sensible à la pression, comprenant :

100 parties en masse d'un polymère comprenant le granule de copolymère séquencé selon l'une quelconque des revendications 1 à 21 ;
de 20 à 500 parties en masse d'un agent poisseux ; et
de 0 à 300 parties en masse d'un plastifiant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61278578 A
- JP 63248817 A
- JP 5098130 A
- WO 2012056939 A
- JP 3619286 B
- JP 4317979 B
- JP 46032415 A
- JP 49036957 A
- JP 48002423 A
- JP 48004106 A
- JP 56028925 A
- JP 59166518 A
- JP 60186577 A
- JP 428704 A
- JP 436636 A
- JP 63004841 A
- JP 63005401 A
- JP 2014104562 A